# EUROPEAN PATENT APPLICATION

(11) **EP 4 086 611 A1**
(43) Date of publication of application: **09.11.2022**
(21) Application number: 21893109.5
(22) Date of filing: 28.09.2021
(51) Int. Cl.: G01N 21/31

(54) **TEST RESULT READING DEVICE**

(30) Priority: 25.03.2021 CN 202110319571; 28.07.2021 CN 202110859527
(71) Applicant: Jiangsu Bioperfectus Technologies Co., Ltd, Medical High-Tech Zone Taizhou Jiangsu 225300 (CN)
(72) Inventor: HU, Chunchun, Taizhou Jiangsu 225300 (CN); CHEN, Renyuan, Taizhou Jiangsu 225300 (CN); SHEN, Haidong, Taizhou Jiangsu 225300 (CN); WEI, Fancheng, Taizhou Jiangsu 225300 (CN); WANG, Xin, Taizhou Jiangsu 225300 (CN); JIN, Wei, Taizhou Jiangsu 225300 (CN); LIU, Zhonghua, Taizhou Jiangsu 225300 (CN); WANG, Guoqiang, Taizhou Jiangsu 225300 (CN)
(74) Representative: Wilson Gunn
(86) International application number: PCT/CN2021/121294
(87) International publication number: WO 2022/198968

(57) **Abstract**

A detection result reading device is provided. The detection result reading device includes a reading device body. The reading device body is provided with a cavity at least capable of accommodating a detection part of a reagent card. A side wall of the cavity is provided with a detection result acquisition device, and the detection result acquisition device is arranged opposite to the detection part of the reagent card. The reading device body is provided with a lifting device for lifting the detection part of the reagent card towards a side of the cavity close to the detection result acquisition device. Through the lifting device, a concave detection window of the reagent card is more tightly attached to a detection sensor, and the detection sensitivity is better improved. Meanwhile, for a substance that is detected and needs the excitation of a special waveband light source, the overall light path is shorter, and the needed light intensity is lower, thereby protecting the substance that is detected without occurring optical signal attenuation caused by an excessively strong light source, which improves the instrument repeatability.

## Description

### TECHNICAL FIELD

The present disclosure relates to the field of biological detection technologies, and specifically relates to a detection result reading device.

### BACKGROUND ART

In currently known medical diagnosis products, a certain quantification index of the analyte is obtained by analyzing fluid samples such as nasopharyngeal secretions, saliva, urine, blood and the like. On the current market, there are desktop-type small analysis instruments and portable handheld instruments.

There are two basic types of core detection means. In a first detection mean:, a light source (including a common light source or a light source with a specific wavelength) is irradiated on a detected object to be detected; and through a mechanical motion scanning mode, a photoelectric sensor is used to convert an optical signal into an electric signal, and the electric signal is processed by a specific algorithm in the mainboard to obtain detection data for analysis. In a second detection means: a light source (including the common light source or the light source with a specific wavelength) forms a uniform light field on the detected object to be detected; and through a camera shooting mode, images are subjected to the image recognition processing analysis to obtain detection data that is needed.

In the prior art, as for the first detection mean, a set of mechanical transmission mechanism is needed to be installed in the instrument; and the set of mechanical transmission mechanism includes a transmission shaft, a sliding rail, a motor and the like. So, the risk that the instrument generates faults in the transmission process is increased, and the cost is increased. As for the second detection mean, due to the limitation that a camera needs to focus at a certain distance during shooting, the size of a detection module of the instrument is large. Moreover, there are the uniformity of the light field, the white balance of the camera, the interference of a background and the like, so more interference factors may exist in the photographing detection mode, which is not facilitative to the stability and the accuracy of detection data.

The inventor believes that a gap between a reagent card and an acquisition device of a detection result reading device is large in the prior art, so that the detection precision is influenced, and thus the improvement is needed.

The information disclosed in the background art is only for enhancement of understanding of the general background of the present disclosure, and is not regarded as admitting or suggesting in any form that the information forms the prior art that is already known to those skilled in the art.

### SUMMARY

Aiming at the defects in the prior art, the present disclosure aims to provide a detection result reading device.

The present disclosure provides a detection result reading device. The detection result reading device includes a reading device body. The reading device body is provided with a cavity at least capable of accommodating a detection part of a reagent card. A side wall of the cavity is provided with a detection result acquisition device, and the detection result acquisition device is arranged opposite to the detection part of the reagent card. The reading device body is further provided with a lifting device for lifting the detection part of the reagent card toward a side of the cavity close to the detection result acquisition device.

In some embodiments, the detection part of the reagent card may be provided with a concave detection window. The detection result acquisition device may be provided with a convex structure. The convex structure of the detection result acquisition device may be matched with the concave detection window, and a first gap between the detection result acquisition device and the side wall of the cavity may enable the reagent card to pass through.

In some embodiments, a lifting slope may be arranged at an end which may be away from a cavity opening of the cavity, and may be configured for guiding the reagent card within the cavity to move towards the side of the cavity close to the detection result acquisition device. The reagent card may move in a direction close to the detection result acquisition device under a cooperative action of the lifting device and the lifting slope. When the reagent card may be close to the side wall where the detection result acquisition device may be located, the reagent card may be tightly attached to the side wall of the cavity, the convex structure of the detection result acquisition device may be embedded in the concave detection window.

In some embodiments, the lifting device may include a lever. The lever may be pivoted in another side wall of the cavity which is opposite to the detection result acquisition device and a rotating shaft of the lever may be not higher than a lower wall of the cavity. In a first state, the reagent card may be not inserted into the cavity, and an end, which may be away from the cavity opening, of the lever tilts towards the side wall of the cavity where the detection result acquisition device may be located. And a second gap between an end which may be close to the cavity opening, of the lever and the side wall of the cavity where the detection result acquisition device may be located may enable the reagent card to pass through. In a second state, the reagent card may be tightly attached to the side wall of the cavity where the detection result acquisition device may be located. Two rotating arms of the lever may be both located in the cavity. A relative height between an end part of each of the two rotating arms of the lever and the rotating shaft of the lever may be equal, and the end part of each of the two rotating arms of the lever may be in contact fit with the reagent card.

In some embodiments, an end, which is close to the cavity opening, of one of the two rotating arms of the lever may be provided with a convex part, and an other end, which is away from the cavity opening, of another one of the two rotating arms of the lever may be provided with a lifting inclined plane. A first opening may be formed in the another side wall, which is provided with the lever having the two rotating arms, of the cavity, and the first opening may enable one of the two rotating arms of the lever which is close to the cavity opening to enter or exit from the interior of the cavity.

In some embodiments, the lifting device may include an elastic piece. An end of the elastic piece may be fixedly connected with the another side wall, which is opposite to the detection result acquisition device, of the cavity. An other end of the elastic piece may extend towards the cavity opening. The elastic piece may tilt towards the detection result opening device from a joint of the elastic piece and the cavity, and the elastic piece may enable the reagent card to enter or exit from the interior of the cavity.

In some embodiments, a side, which is close to the cavity opening, of the elastic piece may be provided with a guiding inclined plane. In the second state, the reagent card may be tightly attached to the side wall of the cavity where the detection result acquisition device may be located. The an end, which is close to the cavity opening, of the elastic piece may abut against the reagent card.

In some embodiments, the lifting device may include a torsion spring. The torsion spring may be installed on an outer wall, which is opposite to the detection result acquisition device, of the cavity. A lifting rod of the torsion spring may be close to the cavity opening. A first dodge opening may be formed in the side wall, which is opposite to the detection result acquisition device, of the cavity. The first dodge opening may enable the lifting rod of the torsion spring to enter or exit from the interior of the cavity. A side, which is away from the detection part, of the reagent card may be provided with a first boss. A side face, which is in contact with the lifting rod of the torsion spring, of the first boss may be a smooth inclined face. The first boss may be in sliding fit with the lifting rod of the torsion spring. After the first boss may be in contact with the lifting rod of the torsion spring, a contact point of the lifting rod of the torsion spring and the first boss may move towards an end part of the first boss along with a movement of the reagent card into the cavity, until the contact point of the lifting rod of the torsion spring and the first boss may move to the end part of the first boss.

In some embodiments, the lifting device may includes an elastic lifting plate. The elastic lifting plate may includes a bottom plate, a spring and a lifting block. The spring may be connected between the bottom plate and the lifting block. A second dodge opening may be formed in the side wall, which is opposite to the detection result acquisition device, of the cavity, and the second dodge opening may enable the lifting block to enter or exit from the interior of the cavity. A second boss may be arranged on the side, which is away from the detection part, of the reagent card, and the second boss may be in sliding fit with the lifting block.

In some embodiments, a side, which is away from the bottom plate, of the lifting block includes a guide slope and an action plane, when the reagent card may move into the cavity, the second boss may be in contact with the guide slope and compress the springs, The second boss may enter the action plane through the guide slope, and the action plane is abutted against with the second boss.

The present embodiment has the following beneficial effects.

Firstly, through the lifting device, a concave detection window of the reagent card is more tightly attached to a detection sensor, and the detection sensitivity is better improved. Meanwhile, for a substance that is detected and needs the excitation of a special waveband light source, the overall light path is shorter, and the needed light intensity is lower, thereby protecting the substance that is detected without occurring optical signal attenuation caused by an excessively strong light source, which improves the instrument repeatability.

Secondly, an original motor transmission structure is replaced by a simple mechanical transmission structure design. So, the cost is reduced, the installation process is simple. And, considering that easy collision and the like of a portable instrument, the risk of the motor transmission structure failure is avoided.

Thirdly, the whole size is small and portable, and compared with the structural precision of a camera detection mode, the robustness is higher in a portable scene.

Fourthly, the relative position between the reagent card and the reading device body is limited through the embedded fit of the concave detection window and the detection result acquisition device having a convex structure, so that the stability of the detection result reading device in an in-place state is improved.

Fifthly, the action force is applied to the reagent card through the lifting device, so that the reagent card is tightly attached onto the inner wall of the cavity, and the stability of the relative position between the reagent card and the cavity is ensured.

The technical problem to be solved by the present disclosure is how to make the reagent card (strip) closer to a position of a sensor during insertion. The detection progress is improved, and the structure cost is reduced. Further, the risk that is caused by the motor transmission device failure is avoided, the structure size is reduced, and the portability is increased.

In order to achieve the above purpose, the present disclosure provides a detection result reading device, the detection result reading device is provided with a cavity at least capable of accommodating a detection part of a reagent card. An upper wall of the cavity is provided with a detection result acquisition device matched with the reagent card, a boss is arranged below the reagent card. When the boss of the reagent card slides into the cavity, the detection part of the reagent card is driven by the boss to be lifted by a preset height towards the detection result acquisition device.

According to a detection result reading device, the detection result reading device is provided with a cavity at least capable of accommodating a detection part of a reagent card. An upper wall of the cavity being provided with a detection result acquisition device matched with the reagent card. A lower wall of the cavity is internally provided with an elastic component. An end part of the elastic component protrudes out of a surface of the cavity by a predetermined height, and when the reagent card slides into the cavity. The end part of the elastic component abuts against a lower part of the reagent card, and the detection part of the reagent card is driven by the elastic component to be lifted up by a preset height towards the detection result acquisition device.

According to a detection result reading device, the detection result reading device is provided with a cavity at least capable of accommodating a detection part of a reagent card. An upper wall of the cavity is provided with a detection result acquisition device matched with the reagent card. A boss is arranged a lower part of the reagent card, a lower wall of the cavity is internally provided with an elastic component, an end part of the elastic component protrudes out of a surface of the cavity by a predetermined height. When the boss of the reagent card slides into the cavity, the end part of the elastic component abuts against the lower part of the reagent card, and the detection part of the reagent card is driven by the boss and the elastic component to be lifted up by a preset height towards the detection result acquisition device.

The concave detection window of the reagent card is apparently concave and used for displaying a detection result of the detection part. So, even if the reagent card is tightly attached to the upper wall of the cavity, there is still at a certain distance between the concave detection window and the upper wall of the cavity. This distance is not worthy in common occasions. However, for precise detection equipment, problems of detection results are caused by this distance. For example, the detection accuracy is reduced.

Therefore, it is designed that the detection result acquisition device protrudes downwards to be matched with the reagent card. However, in this way, if the reagent card is enabled to be plugged into the cavity, the distance from the detection result acquisition device to the lower wall of the cavity is at least equal to the height of the reagent card. So through a design idea, a lifting mechanism is additionally arranged to realize that the detection result acquisition device is attached closely to the concave detection window.

In some embodiments, the detection part of the reagent card may be lower than other parts of the reagent card in height. The detection result acquisition device at least partially may protrude out of the upper wall of the cavity, and an outer contour, which is higher than the upper wall of the cavity, of the detection result acquisition device may be less than an inner contour of the concave part of the detection part of the reagent card. An upper wall detection device corresponding to the concave detection window of the reagent card may correspond to the sinking design of the inner wall. Therefore, when the reagent card may reach the detection position, the reagent card may be upwards attached to a sinking detection part under the elastic action of the lower end of the detection part.

In some embodiments, the detection part of the reagent card may be provided with a concave detection window. A convex structure of the detection result acquisition device may be matched with the concave detection window of the detection card in shape. The detection result acquisition device corresponding to an inner wall of the cavity may be designed to sink, and when the reagent card may be inserted to reach a detection position, the reagent card may be attached closely to the detection part after being sunk, under an action of at least one of the elastic component or the boss of the reagent card

In some embodiments, a height of the cavity may be greater than a height of the reagent card, and a height between the detection result acquisition device and the lower wall of the cavity may be at least equal to a height of the reagent card.

In some embodiments, the lower wall of the cavity may include mainly a flat-bottom slideway and an end part slope of detection channel base arranged at a tail end of the flat-bottom slideway. The detection channel base end part slope may correspond to an end part of the reagent card and may be used for assisting in lifting the end part of the reagent card and limiting the end part of the reagent card.

In some embodiments, the detection result acquisition device may be one of a fluorescence system, a visual camera system and a reflection system.

In some embodiments, the detection result reading device may be formed by combing a detection channel upper cover and a detection channel base together. A first component may include a detection sensor, a light source and a channel shell upper cover; a second component may include a lifting mechanism and a channel shell base, and the first component and the second component may be combined up and down to form a whole detection structure. A bottom of the reagent card may need to be provided with a boss matched with an interior of the detection structure, and the concave detection window of the reagent card also may need to be matched with a detection channel upper cover detection window in the detection structure, so that the reagent card may be lifted to be close to the detection sensor after being inserted.

In some embodiments, the detection channel upper cover and the detection channel base may be integrally formed or assembled in a split mode. The detection channel upper cover and the detection channel base may be designed to be of a split structure or an integral structure according to actual requirements.

In some embodiments, the elastic component may be a torsion spring, and the torsion spring may be installed in a clamping groove preset in the lower wall of the cavity through a torsion spring bolt.

When the acting force in the horizontal direction is applied to insert the reagent card into a certain depth of the detection channel, the boss of a bottom of the reagent card can contact with the bottom lifting mechanism (taking the torsion spring as an example here). The elastic lifting mechanism lifts the reagent card upwards along the slope of the boss, and a head of the reagent card lifts up along with the slideway in the detection channel at the same time, so that the stability of the reagent card when being lifted is ensured. When the reagent card is lifted to a top of the detection channel, the concave detection window of the reagent card is matched with the detection window of the detection channel upper cover of the detection module. At this time, no effect can be achieved when the acting force in the horizontal direction is continuously applied. Because the lifting mechanism has certain elastic force, the reagent card can be kept at a position that it is tightly attached to the detection window of the detection channel upper cover in the detection process.

In some embodiments, the elastic component may be further an elastic piece, a cam, a cantilever or other physical structures with a lifting function.

In some embodiments, the elastic component may be the elastic piece. An end of the elastic piece may be fixedly connected with the lower wall of the cavity, and an other end, corresponding to a cavity opening of the cavity, of the elastic piece may tilt towards the upper wall of the cavity. When the acting force in the horizontal direction is applied to insert the reagent card into a certain depth of the detection channel, the bottom of the reagent card can can contact with the elastic piece. The elastic piece tiles upwards to provide the lifting force for the reagent card, so as to ensure that the reagent card is inserted along the upper wall of the cavity. At this time, the head of the reagent card lifts along with the end part slope of the detection channel base in the detection channel, so that the stability of the reagent card when being lifted is ensured. When the reagent card is lifted to the top, the concave detection window of the reagent card is matched with the detection window of the detection channel upper cover of the detection module. At the moment, no effect can be achieved when the acting force in the horizontal direction is continuously applied. Because the elastic piece has certain elastic force, the reagent card can be kept at a position that it is tightly attached to the detection window of the detection channel upper cover in the detection process.

In some embodiments, the elastic component may be a lever, the lever may be pivoted in the lower wall of the cavity. A fixed shaft of the lever may be not higher than the lower wall of the cavity. An end part of each of the two rotating arms of the lever upwards may protrude by a predetermined height by taking the fixed shaft of the lever as a reference. A protruding height of an inner end part may be greater than a protrusion height of an outer end part. When the reagent card may slide into and abuts against the inner end part of the lever, the inner end part of the lever and the end part of the reagent card, the outer end part of the lever and the lower part of the reagent card may form upper and lower position-limiting respectively. The detection result acquisition device and the detection part of the reagent card, the inner end part of the lever and the end part of the reagent card may form in-out movement position-limiting respectively.

In some embodiments, a lever bottom lifting block may be arranged at the outer end part of the lever, a lever end part slope may be arranged at the inner end part of the lever. A groove may be formed in a portion, corresponding to the lever, of the lower wall of the cavity, the fixed shaft of the lever is arranged in the groove. One of the two rotating arms of the lever may enter the groove when the one of the two rotating arms selectively rotates to an extreme position. When the reagent card may slide into the cavity and reache the outer end part of the lever, the lever bottom lifting block of the lever may be arranged in the groove and is not higher than the lower wall of the cavity. When the reagent card may continue to slide into and abut against the lever end part slope of the lever, the boss of the reagent card may be capable of bearing a force to be lifted up and abut against the lower part of the reagent card.

When the acting force in the horizontal direction is applied to insert the reagent card into a certain depth of the detection channel, the bottom of the reagent card can contact with the lever bottom lifting block of the lever. The lever bottom lifting block falls back into the groove, and the lever end part slope necessarily tilts upwards at the same time. So, when the end part of the reagent card is in contact with the lever end part slope, the lever end part slope tiles upwards to provide the lifting force for the reagent card, so as to ensure that the reagent card is inserted along the upper wall of the cavity. The head of the reagent card lifts along with the lever end part slope at the same time, so that the stability of the reagent card when being lifted is ensured. In addition, after the lever end part slope bears a force, the lever end part slope naturally drives the lever bottom lifting block to lift up to abut against a lower surface of the reagent card. When the reagent card is lifted to the top of the detection channel, the concave detection window of the reagent card is matched with the detection window of the detection channel upper cover of the detection module. And, no effect can be achieved when the acting force in the horizontal direction is continuously applied at the moment. Because the elastic piece has certain elastic force at two ends of the lever, the reagent card can be kept at the position that it is tightly attached to the detection window of the detection channel upper cover in the detection process.

In some embodiments, when the reagent card may slide into and abut against the inner end part of the lever, the lever end part slope of the lever and the end part of the reagent card, the lever bottom lifting block of the lever and the lower part of the reagent card form upper and lower position-limiting respectively, and the detection result acquisition device and the detection part of the reagent card, the lever end part slope of the lever and the end part of the reagent card may form in-out movement position-limiting respectively.

In some embodiments, when an outer one of the two rotating arms and an inner one of the two rotating arms of the lever may be both in a horizontal state, a height of the lever end part slope may be larger than a height of the lever bottom lifting block.

In some embodiments, the elastic component may be an elastic lifting plate, a boss may be arranged the lower part of the reagent card which is corresponding to detection part. A notch that is configured for enabling the elastic lifting plate to axially slide may be formed in a lower wall of the cavity opening. When a top of the elastic lifting plate may do not bear a force, a height between an end part of the elastic lifting plate and the detection result acquisition device may be equal to a height of the reagent card. When the boss of the reagent card may slide into the cavity opening, the end part of the elastic lifting plate may abut against the boss of the reagent card and may be pressed to sink, and the detection part of the reagent card may be driven by the boss and the elastic component to be lifted up to a preset height towards the detection result acquisition device.

In some embodiments, the elastic lifting plate may include a bottom plate of lifting plate elastic device, a lifting plate spring and a lifting plate. The bottom plate of lifting plate elastic device may be assembled at a bottom of the detection result reading device, and the lifting plate spring may be supported between the bottom plate of lifting plate elastic device and the lifting plate. A surface of the lifting plate may include a lifting slope and a plane. When the acting force in the horizontal direction is applied to insert the reagent card into a certain depth of the detection channel, the boss of the bottom of the reagent card can contact with the elastic lifting plate, and the elastic lifting plate lifts the reagent card upwards along the slope of the boss. The head of the reagent card lifts along with the slideway in the detection channel at the same time, so that the stability of the reagent card when being lifted is ensured. And, when the reagent card is lifted to the top of the detection channel, the concave detection window of the reagent card is matched with the detection window of the detection channel upper cover of the detection module. And, no effect can be achieved when the acting force in the horizontal direction is continuously applied at the moment. Because the lifting mechanism has certain elastic force, the reagent card can be kept at the position that it is tightly attached to the detection window of the detection channel upper cover in the detection process.

In some embodiments, in the technical scheme, the lifting plate elastic device bottom plate may be provided with a lifting plate spring base. An end of each of the lifting plate springs may be sleeved on the lifting plate spring base, and an other end of the lifting plate spring may abut against an interior of the lifting plate.

Explanation that are noted as follows.

Firstly, the height of the cavity herein refers to the vertical distance between the upper wall of the cavity and the lower wall of the cavity, and the height of the reagent card refers to the vertical distance between an upper surface of the reagent card and the lower surface of the reagent card.

Secondly, one side of the reagent card where the detection part is located is set as the upper surface of the reagent card, and an other side, opposite to the detection part, of the reagent card is set as the lower surface of the reagent card; and

Thirdly, the side, corresponding to the detection part, of the cavity is set as the upper wall of the cavity, and the side, opposite to the detection part, of the cavity is set as the lower wall of the cavity.

Compared with the prior art, the embodiments have the following beneficial effects.

Firstly, through the lifting device, a concave detection window of the reagent card is more tightly attached to a detection sensor, and the detection sensitivity is better improved. Meanwhile, for a substance that is detected and needs the excitation of a special waveband light source, the overall light path is shorter, and the needed light intensity is lower, thereby protecting the substance that is detected without occurring optical signal attenuation caused by an excessively strong light source, which improves the instrument repeatability.

Secondly, an original motor transmission structure is replaced by a simple mechanical transmission structure design. So, the cost is reduced, the installation process is simple. And, considering that easy collision and the like of a portable instrument, the risk of the motor transmission structure failure is avoided.

Thirdly, the whole size is small and portable, and compared with the structural precision of a camera detection mode, the robustness is higher in a portable scene.

### BRIEF DESCRIPTION OF THE DRAWINGS

Other features, the purpose and advantages of the present disclosure will become more apparent by reading the detailed description of non-restrictive embodiments with reference to the accompany drawings:
FIG. 1 is a schematic diagram of an external structure of a reading device body according to the present disclosure;
FIG. 2 is an explosive schematic diagram of an overall structure of a detection result reading device according to a first embodiment of the present disclosure;
FIG. 3 is a schematic diagram of an overall structure of the detection result reading device in an insertion stage according to the first embodiment of the present disclosure;
FIG. 4 is a cross-sectional schematic diagram of an overall structure of the detection result reading device in a lifting stage according to the first embodiment of the present disclosure;
FIG. 5 is a cross-sectional schematic diagram of an overall structure of the detection result reading device in an in-place state according to the first embodiment of the present disclosure;
FIG. 6 is an explosive schematic diagram of an overall structure of the detection result reading device according to a second embodiment of the present disclosure;
FIG. 7 is a cross-sectional schematic diagram of an overall structure of the detection result reading device in a lifting stage according to the second embodiment of the present disclosure;
FIG. 8 is a cross-sectional schematic diagram of an overall structure of the detection result reading device in an in-place state according to the second embodiment of the present disclosure;
FIG. 9 is an explosive schematic diagram of an overall structure of the detection result reading device according to a third embodiment of the present disclosure;
FIG. 10 is a cross-sectional schematic diagram of an overall structure of the detection result reading device in a lifting stage according to the third embodiment of the present disclosure;
FIG. 11 is a cross-sectional schematic diagram of an overall structure of the detection result reading device in an in-place state according to the third embodiment of the present disclosure;
FIG. 12 is an explosive schematic diagram of an overall structure of the detection result reading device according to a fourth embodiment of the present disclosure;
FIG. 13 is a cross-sectional schematic diagram of an overall structure of the detection result reading device in a lifting stage according to the fourth embodiment of the present disclosure; and
FIG. 14 is a cross-sectional schematic diagram of an overall structure of the detection result reading device in an in-place state according to the fourth embodiment of the present disclosure.
   List of the reference characters: 1' reading device body; 11' cavity; 12' detection result acquisition device; 14' detection channel upper cover; 15' detection channel lower cover; 2' reagent card; 21' concave detection window; 3' lifting slope; 4' lever; 41' embedded groove; 42' limiting part; 43' first opening; 44' concave part; 45' lifting inclined plane; 5' elastic piece; 51' guiding inclined plane; 6' torsion spring; 61' mounting base; 62' bolt; 63' first dodge opening; 64' lifting rod; 65' first boss; 7' elastic lifting plate; 71' bottom plate; 72' spring; 73' lifting block; 8' second boss; 81' second dodge opening; 9' guide slope; and 91' action plane.

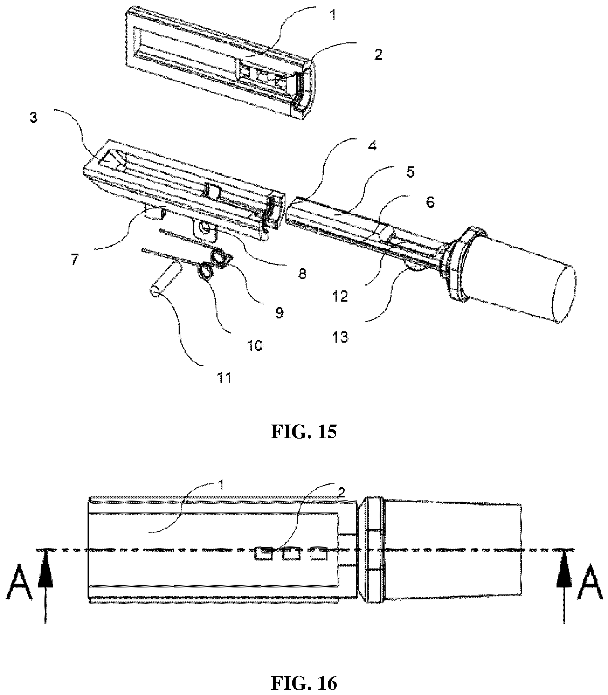

FIG. 15 is an exploded schematic diagram of components according to the fifth embodiment;
FIG. 16 is a side view after the assembling is finished according to a fifth embodiment of the present disclosure;

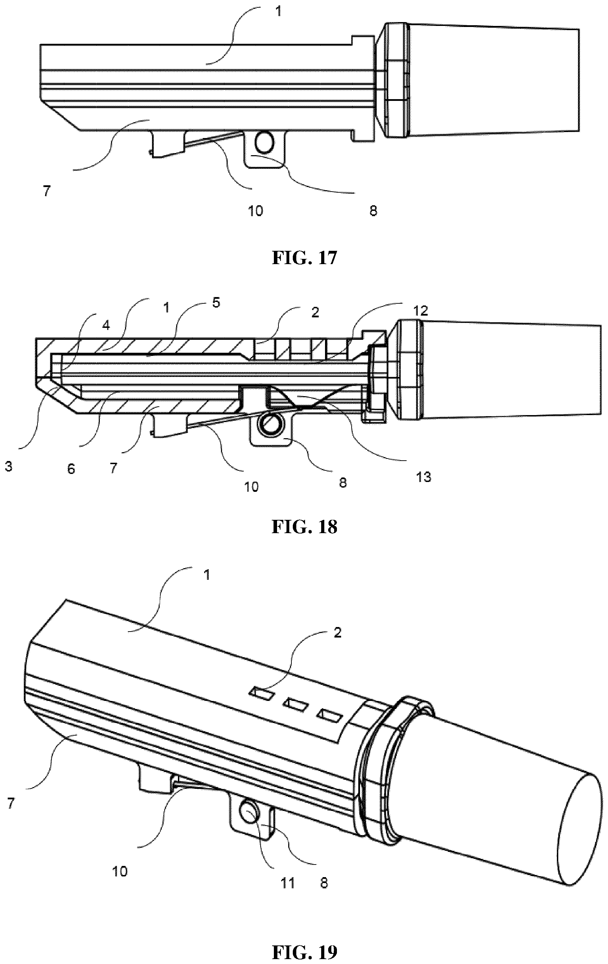

FIG. 17 is a bottom view of FIG. 16;
FIG. 18 is a section view taken along line A-A of FIG. 16;
FIG. 19 is a perspective view after the assembling is finished according to the fifth embodiment of the present disclosure;

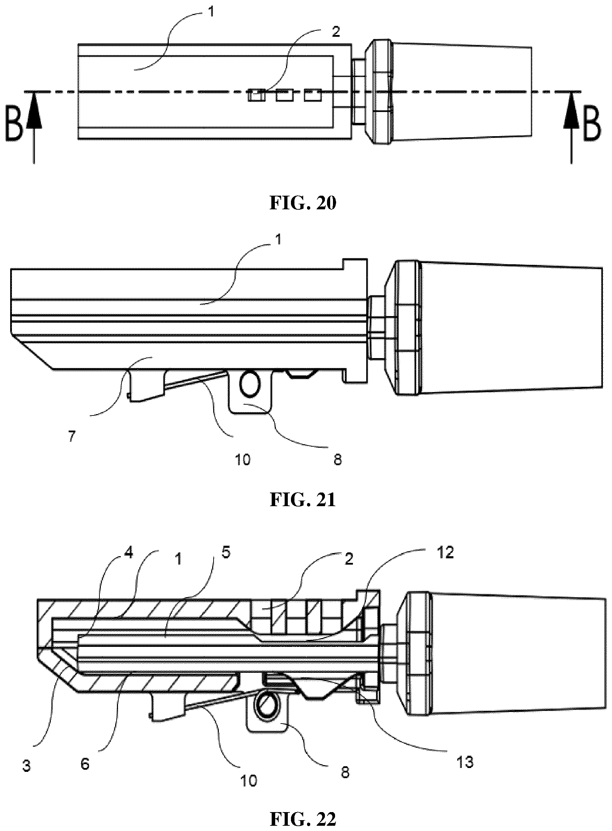

FIG. 20 is a top view when the assembling is not finished according to the fifth embodiment;
FIG. 21 is a bottom view of FIG. 20;
FIG. 22 is a section view taken along line B-B of FIG. 20; and

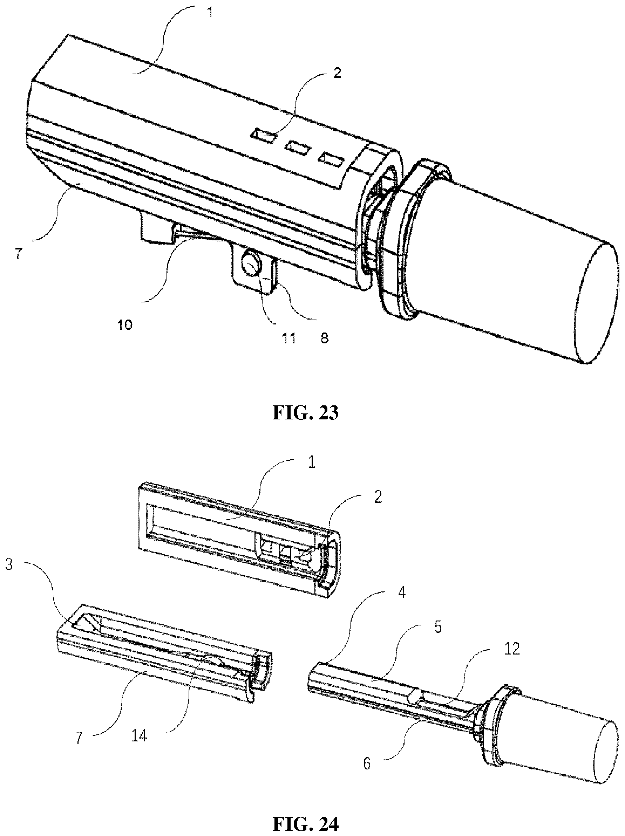

FIG. 23 is a perspective view when the assembling is not finished according to the fifth embodiment.
   List of the reference characters: 1 detection channel upper cover; 2 detection window of a detection channel upper cover; 3 end part slope of a detection channel base; 4 end part of reagent card; 5 upper surface of a reagent card; 6 lower surface of a reagent card ; 7 detection channel base; 8 torsion spring mounting base of a detection channel base; 9 torsion spring lifting rod; 10 torsion spring; 11 torsion spring bolt; 12 concave detection window; and 13 boss.
FIG. 24 is an exploded decomposition schematic diagram of components in a sixth embodiment;

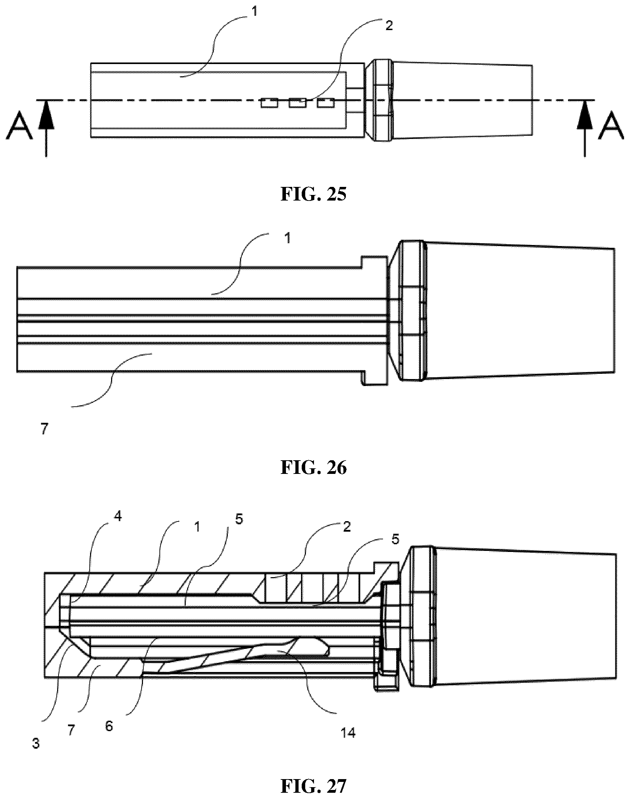

FIG. 25 is a top view after the assembling is finished in the sixth embodiment;
FIG. 26 is a side view after the assembling is finished in the sixth embodiment;
FIG. 27 is a section view taken along line A-A of FIG. 25;

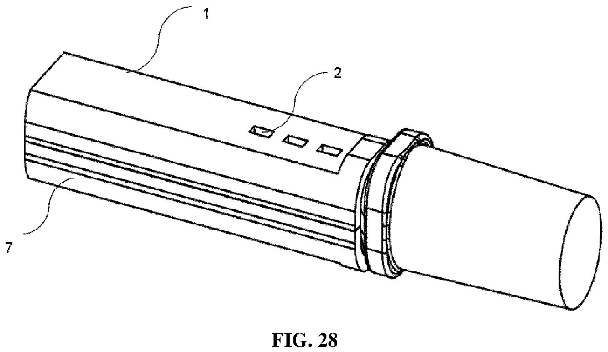

FIG. 28 is a perspective view after the assembling is finished in the sixth embodiment;

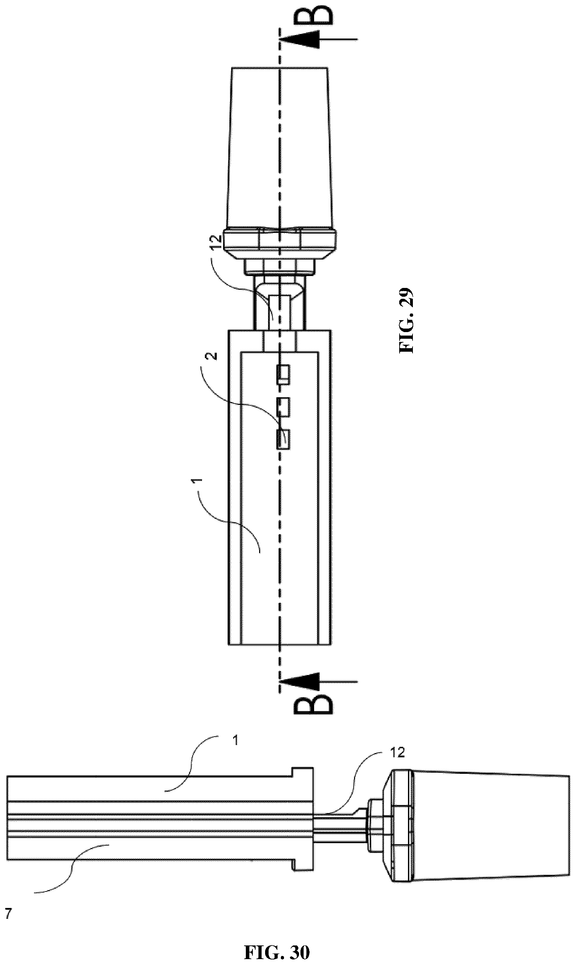

FIG. 29 is a top view when the assembling is not finished in the sixth embodiment;
FIG. 30 is a side view when the assembling is not finished in the sixth embodiment;

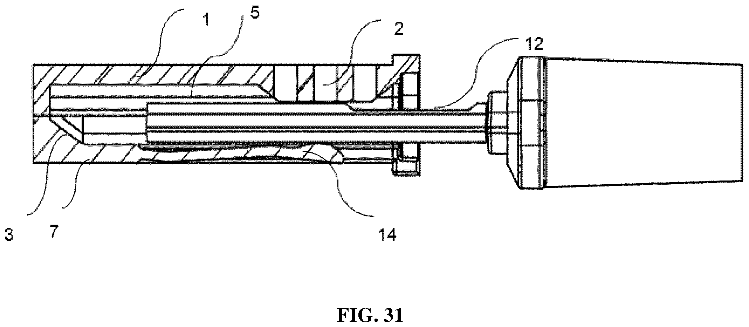

FIG. 31 is a section view taken along line B-B of FIG. 29; and

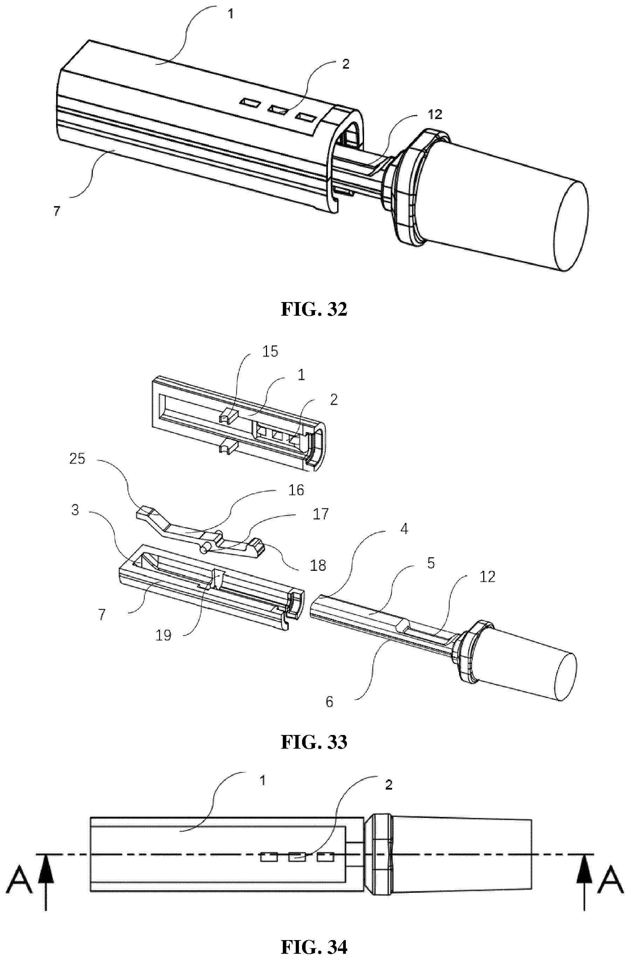

FIG. 32 is a perspective view when the assembling is not finished in the sixth embodiment.
   List of the reference characters: 1 detection channel upper cover; 2 detection window of a detection channel upper cover; 3 end part slope of a detection channel base; 4 end part of a reagent card; 5 upper surface of a reagent card; 6 lower surface of a reagent card; 7 detection channel base; 12 concave detection window; and 14 elastic piece.
FIG. 33 is an exploded schematic diagram of the structure in a seventh embodiment;
FIG. 34 is a schematic diagram of the reagent card in a completely inserted state in the seventh embodiment;

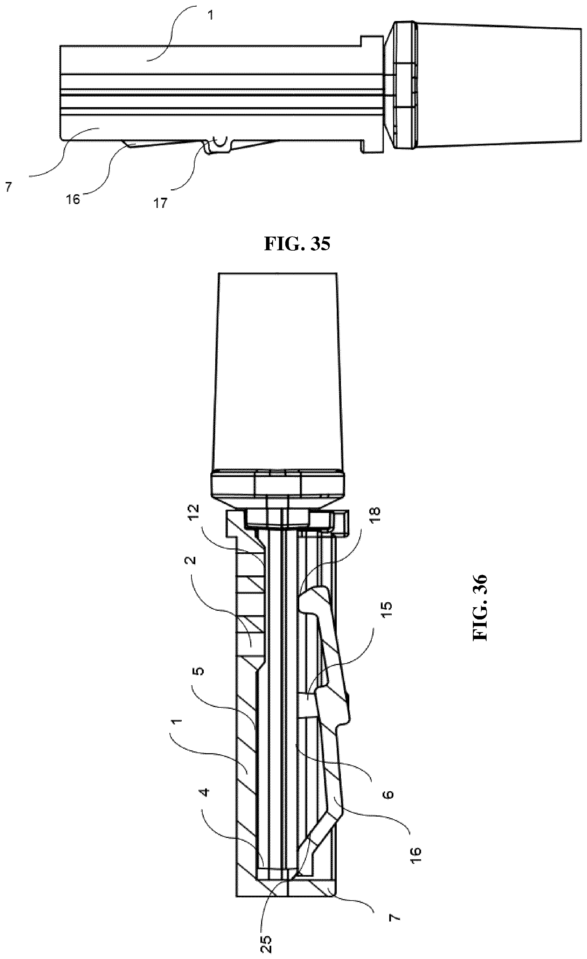

FIG. 35 is a bottom view of FIG. 34;
FIG. 36 is a section view taken along line A-A of FIG. 34;

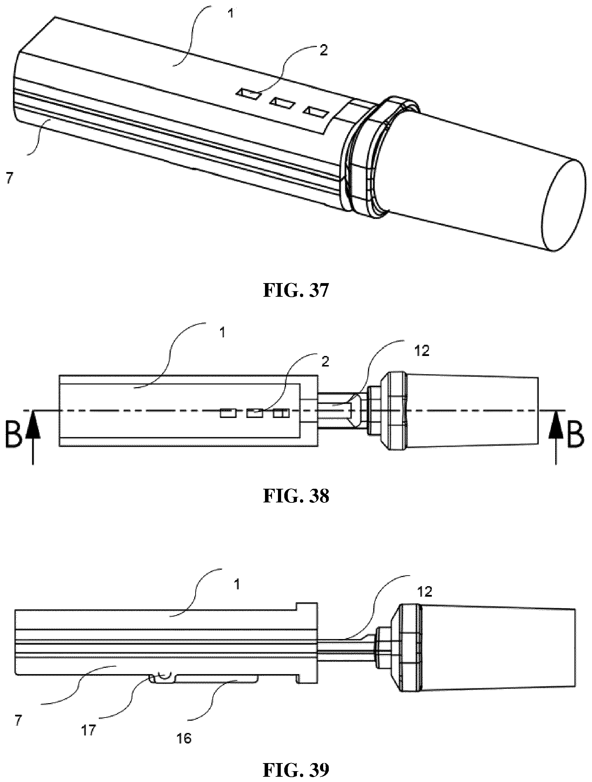

FIG. 37 is a schematic diagram of a perspective structure after the device is completely inserted in the seventh embodiment;
FIG. 38 is a schematic structural diagram when the reagent card is not completely inserted in the seventh embodiment;
FIG. 39 is a bottom view of FIG. 38;

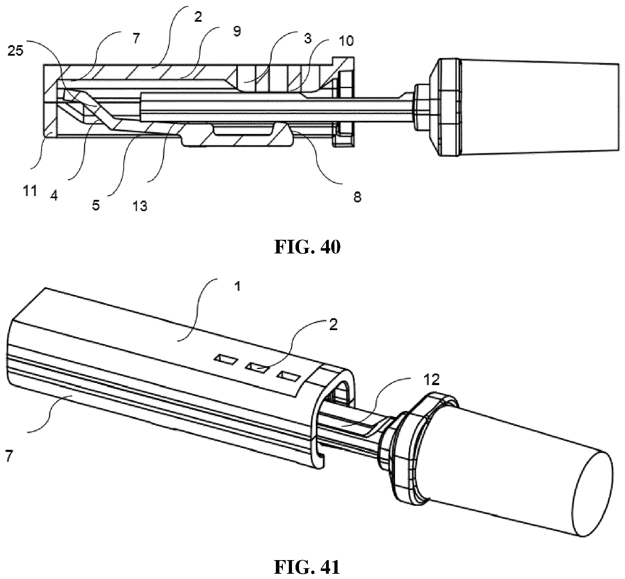

FIG. 40 is a section view taken along line B-B of FIG. 38; and
FIG. 41 is a schematic diagram of a perspective structure when the reagent card is not completely inserted in the seventh embodiment.
   List of the reference characters: 1 detection channel upper cover; 2 detection window of a detection channel upper cover; 3 end part slope of a detection channel base; 4 end part of a reagent card; 5 upper surface of a reagent card; 6 lower surface of a reagent card; 7 detection channel base; 12 concave detection window; 15 shaft lug of a detection channel upper cover; 16 lever; 17 fixed shaft of a lever; 18 bottom lifting block of a lever; 19 clamping groove of a lever shaft of a detection channel base; and 25 end part slope of a lever.

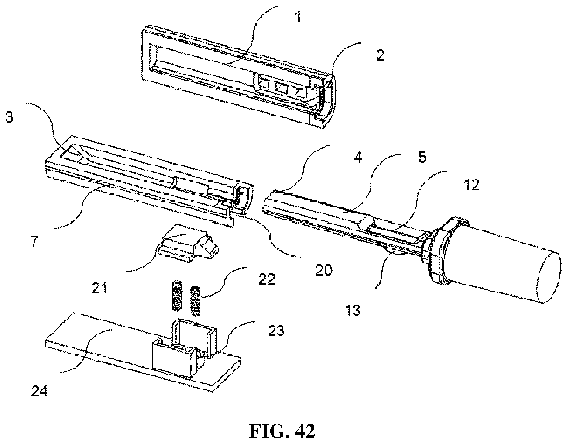

FIG. 42 is an exploded schematic diagram of components in a eighth embodiment;

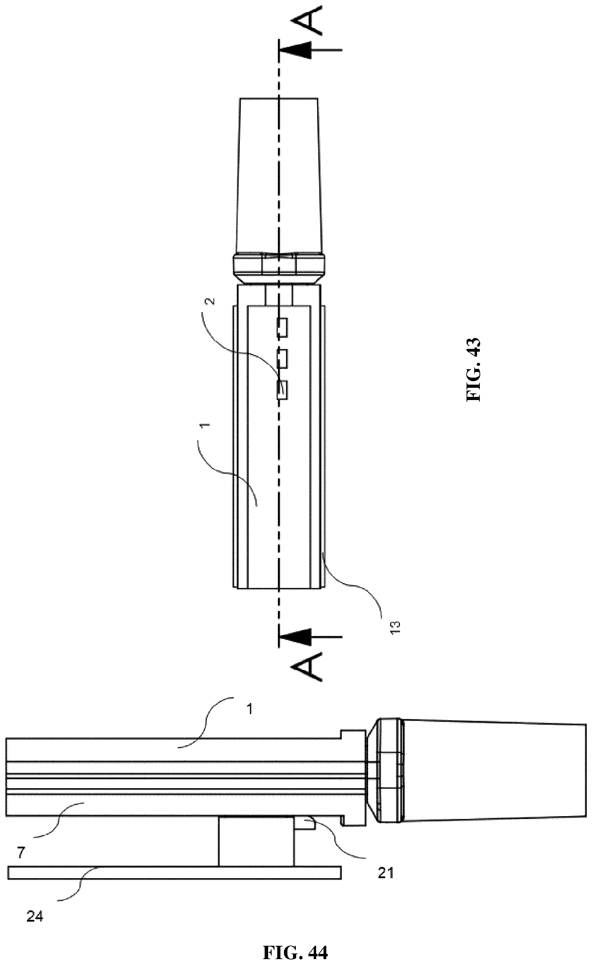

FIG. 43 is a schematic diagram of the reagent card in a horizontally inserted state in the eighth embodiment;
FIG. 44 is a bottom view of FIG. 43;

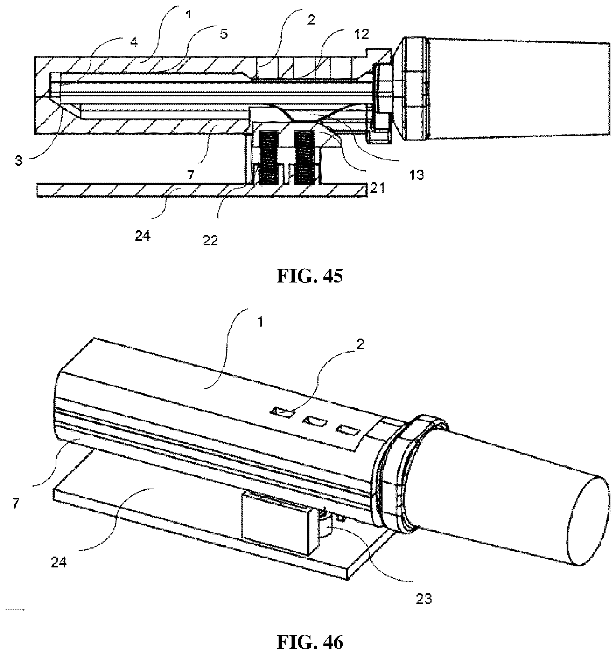

FIG. 45 is a section view taken along line A-A of FIG. 43;
FIG. 46 is a perspective view of the reagent card in a completely inserted state in the eighth embodiment;

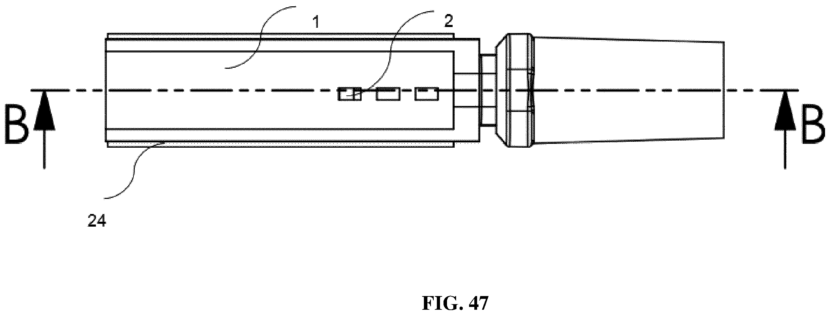

FIG. 47 is a schematic diagram of the reagent card in an incompletely inserted state in the eighth embodiment;

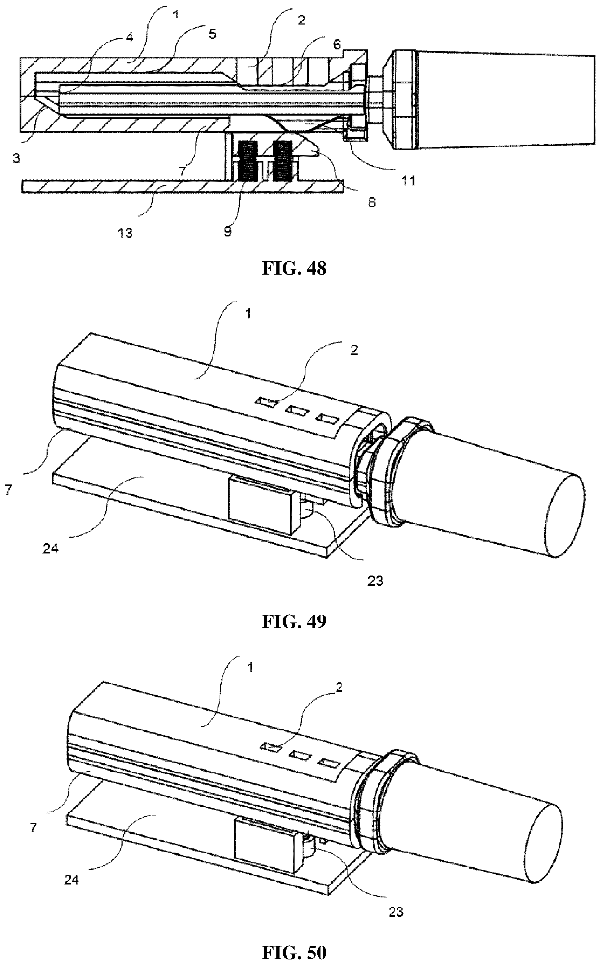

FIG. 48 is a section view taken along line B-B of FIG. 47; and
FIG. 49 is a perspective view of the reagent card in an incompletely inserted state in the eighth embodiment.
   List of the reference characters: 1 detection channel upper cover; 2 detection window of a detection channel upper cover; 3 end part slope of a detection channel base; 4 end part of a reagent card; 5 upper surface of a reagent card; 7 detection channel base; 12 concave detection window; 13 boss; 20 lower notch of a detection channel inlet; 21 lifting plate; 22 lifting plate spring; 23 lifting plate spring base; and 24 bottom plate of a lifting plate elastic device.

### DETAILED DESCRIPTION OF THE EMBODIMENTS

The following describes the present disclosure in conjunction with specific embodiments. The following embodiments help those skilled in the art to further understand the present disclosure, but do not limit the present disclosure in any way. It should be noted that several modifications and improvements may also be made to those skilled in the art without departing from the inventive concept, which belong to the scope of the present disclosure.

### Embodiment I

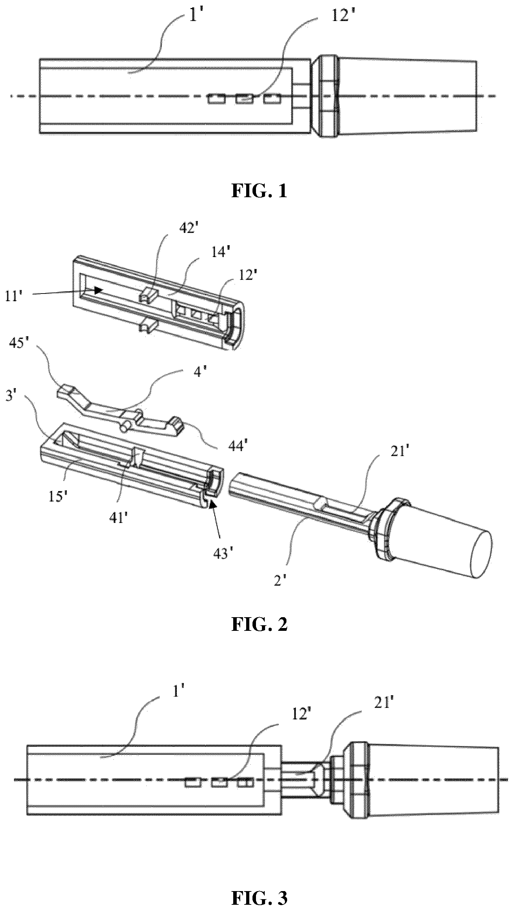

As shown in FIG. 1 and FIG. 2, a detection result reading device is provided, which includes a reading device body 1' and a reagent card 2'. A cavity 11' that is at least capable of accommodating a detection part of the reagent card 2' is integrally formed in an interior of the reading device body 1'. The detection result acquisition device 12' is installed on any side wall of the cavity 11'. The detection result acquisition device 12' is a convex shape in the interior of the cavity 11', and a gap between the detection result acquisition device 12' and the side wall of the cavity 11' allows the reagent card 2' to pass through. The detection part of the reagent card 2' is located in a middle of the reagent card 2'. A concave detection window 21' is formed in the detection part of the reagent card 2', and the concave detection window 21' is opposite to the detection result acquisition device 12'.

A lifting device for lifting the detection part of the reagent card 2' towards a side of the cavity close to the detection result acquisition device 12' is installed on the reading device body 1'. A lifting slope 3' is integrally formed at an end, deviating from an cavity opening, of the cavity 11', and the lifting slope 3' is matched with an end, entering the cavity 11', of the reagent card 2' and is configured for guiding the reagent card 2' entering into the cavity 11' to move towards a side close to the detection result acquisition device 12'. When the reagent card 2' is installed in place in the cavity 11', a side wall of the side, close to the detection result acquisition device 12', of the reagent card 2' is tightly attached to an inner wall of the cavity 11', and at the moment, the detection result acquisition device 12' enters a concave area of the concave detection window 21'.

The reading device body 1' includes a detection channel upper cover 14' and a detection channel lower cover 15'. The detection channel upper cover 14' and the detection channel lower cover 15' are connected through bolts in a fastened mode. The cavity 11' is formed through the cooperation of the detection channel upper cover 14' and the detection channel lower cover 15'. The detection result acquisition device 12' is installed on a side, close to the cavity opening, of the detection channel. The lifting slope 3' is integrally formed at an end, away from the cavity 11' opening, of the detection channel lower cover 15'.

As shown in FIG. 2, FIG. 3, FIG. 4 and FIG. 5, the lifting device is a lever 4'. An embedded groove 41' configured for rotatably installing a rotating shaft of the lever 4' is formed in the middle of the detection channel lower cover 15' along the length direction. A limiting part 42' is integrally formed at an edge position of the side wall, corresponding to the embedded groove 41', of the detection channel upper cover 14', and the limiting part 42' is rotatably matched with the rotating shaft of the lever 4'. The rotating shaft of the lever 4' is rotatably installed on the detection channel lower cover 15' through the cooperation of the embedded groove 41' and the limiting part 42', and the rotating shaft of the lever 4' does not protrude out of the side wall of the detection channel lower cover 15'.

The lever 4' is of an asymmetric structure. The height of an end part of a first rotating arm, away from the cavity 11' opening, of the lever 4' is slightly larger than the height of an end part of a second rotating arm, close to the cavity 11' opening, of the lever 4' in a conventional state, and a first opening 43' is formed in the side, close to the cavity 11' opening, of the detection channel lower cover 15'. The first opening 43' allows corresponding a rotating arm of the lever 4' to enter or exit from the interior of the cavity 11'. The lifting slope 3' and the second rotating arm, away from the cavity 11' opening, of the lever 4' are limited, so that the second rotating arm, away from the cavity opening 11', of the lever 4' cannot completely exit from the cavity 11'. The gap between the end, close to the cavity 11' opening, of the lever 4 and the side wall of the cavity 11' where the detection result acquisition device 12' is located allows the reagent card 2' to pass through. Further, in order to improve the convenience in inserting the reagent card 2' into the cavity 11', an end of the second rotating arm, close to the cavity 11' opening, of the lever 4' is provided with a convex part 44', and a side of the first rotating arm, deviating from the cavity 11' opening, of the lever 4' is provided with a lifting inclined plane 45'.

By adopting the design, when the reagent card 2' just enters the cavity 11', the second rotating arm, close to the cavity 11' opening, of the lever 4' is forced to rotate downwards, the first rotating arm, away from the cavity 11' opening, of the lever 4' rotates upwards. When the reagent card 2' abuts against the lifting slope 3', the two sides of the lever 4' are stressed at the same time, and upward force is continuously provided for the reagent card 2' until the concave detection window 21' and the detection result acquisition device 12' are aligned and are mutually inserted to form limitation in a inserted direction. At the moment, the concave detection window 21' on the reagent card 2' and the detection result acquisition device 12' play a role of locking structures and are tightly attached to each other, so that data acquisition work can be better completed.

Due to the fact that a two rotating arms, making contact with the reagent card 2', of the lever 4' provide resistance for movement of the reagent card 2' relative to the cavity 11'. It is guaranteed that the concave detection window 21' and the detection result acquisition device 12' are in a clinging state, and then it is guaranteed that data collection work is better completed.

The process of inserting the reagent card 2' into the cavity 11' includes three states, namely a horizontally inserted state, a lifting state and an in-place state.

As shown in FIG. 3, in the horizontally inserted state, a force horizontally towards the interior of the cavity 11' is applied to the reagent card 2', the reagent card 2' is deeply inserted into the cavity 11'. At the moment, the convex part 44' on the second rotating arm of the lever 4' is in contact with the reagent card 2' and forced to rotate downwards. and the end part of the first rotating arm, away from the cavity opening 11', of the lever 4' is lifted upwards, so that the reagent card 2' is maintained in a stable state.

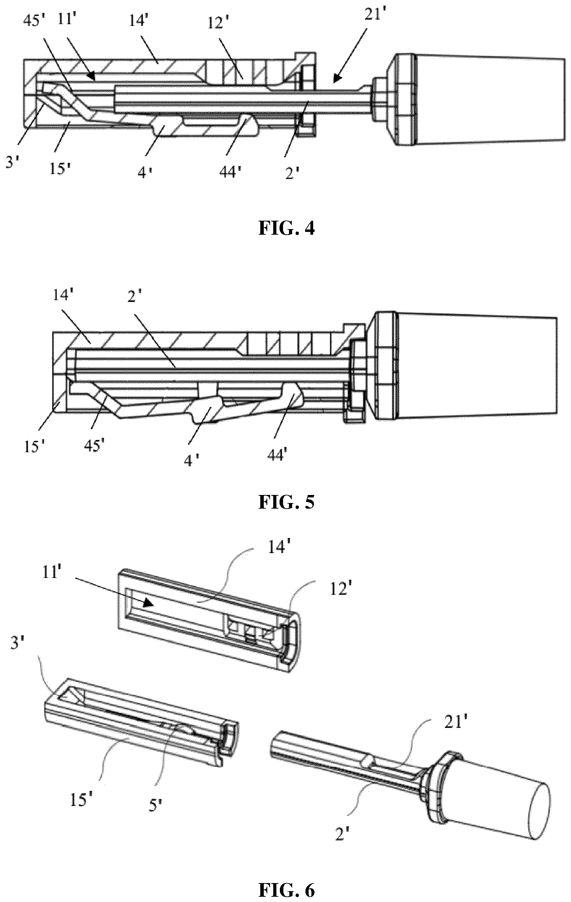

As shown in FIG. 4, in the lifting state, the acting force horizontally towards the interior of the cavity 11' is continuously applied until the end part of the reagent card 2' abuts against the lifting inclined plane 45'. The reagent card 2' continues to be lifted obliquely upwards along with an inclination angle of the lifting inclined plane 45', and the middle of the reagent card 2' continues to be subjected to the lifting force provided by the convex part 44' of the end part of the second rotating arm, close to the cavity opening 11', of the lever 4', so that the reagent card 2' is stably lifted.

As shown in FIG. 5, in the in-place state, when the end part of the reagent card 2' abuts against a top end of the lifting inclined plane 45' on the lever 4', the concave detection window 21' and the detection result acquisition device 12' completely coincide. The reagent card 2' is limited by the convex part 44' on the second rotating arm, close to the cavity 11' opening, of the lever 4', so that the relative positions of the concave detection window 21' and the detection result acquisition device 12' are kept stable, and the operation steps of inserting the reagent card 2' and lifting the reagent card 2' are completed.

In order to take out the reagent card 2', a user applies a pulling force and then the lever 4' is slightly deformed until the reagent card 2' is separated from the lifting inclined plane 45' on the lever 4', so that the lever 4' rotates the second rotating arm, close to the cavity 11' opening, of the lever 4' in a direction exiting from the cavity 11' and releases the reagent card 2'.

As shown in FIG. 2, when the reagent card 2' is inserted into the cavity 11', the convex part 44' on the lever 4' abuts against the side wall of the reagent card 2'. The reagent card 2' does not make contact with the lifting inclined plane 45' on the lever 4'. Along with continuous insertion of the reagent card 2', a gradual lifting process is conducted from a middle shaft of the lever 4' to the lifting slope 3'. According to the lever principle, the end part of the first rotating arm of the lever 4' where the lifting inclined plane 45' is located is subjected to vertical downward pressure. The end part of the second rotating arm of the lever 4' where the convex part 44' is located feeds back a vertical upward lifting force to the reagent card 2'.

When the reagent card 2' is completely inserted into the cavity 11', the end part of the reagent card 2' passes over the lifting slope 3' on the lever 4' to the end part of the first rotating arm. The reagent card 2' is supported by the rotating arms of the lever 4', and the rotating arms of the lever 4' are subjected to the vertical downward pressure transmitted by the reagent card 2' due to the extrusion of the inner wall of the cavity 11'. According to the lever principle, a supporting point is the rotating shaft of the lever 4'. The second rotating arm, close to the cavity 11' opening, of the lever 4' is lifted. A vertically upward acting force is applied to the reagent card 2'. The concave detection window 21' and the detection result acquisition device 12' are tightly attached, and the action of lifting the reagent card 2' after insertion is completed.

### Embodiment II

As shown in FIG. 6, FIG. 7 and FIG. 8, a detection result reading device is provided, which includes the reading device body 1' and the reagent card 2'. A cavity 11' at least capable of accommodating a detection part of the reagent card 2' is integrally formed in the interior of the reading device body 1'. The detection result acquisition device 12' is installed on any side wall of the cavity 11'. The detection result acquisition device 12' is in a convex state on the interior of the cavity 11', and a gap between the detection result acquisition device 12' and the side wall of the cavity 11' allows the reagent card 2' to pass through. The detection part of the reagent card 2' is located in a middle of the reagent card 2'. A concave detection window 21' is formed in the detection part of the reagent card 2', and the concave detection window 21' corresponds to the detection result acquisition device 12'.

A lifting device for lifting the detection part of the reagent card 2' to the side close to the detection result acquisition device 12' is installed on the reading device body 1'. A lifting slope 3' is integrally formed at the end, deviating from an cavity opening, of the cavity 11', and the lifting slope 3' is matched with the end, entering the cavity 11', of the reagent card 2' and is configured for guiding the reagent card 2' entering into the cavity 11' to move towards the side close to the detection result acquisition device 12'. When the reagent card 2' is installed in place in the cavity 11', the side wall of the side, close to the detection result acquisition device 12', of the reagent card 2' is tightly attached to the inner wall of the cavity 11', and at the moment, the detection result acquisition device 12' enters the concave area of the concave detection window 21'.

The reading device body 1' includes a detection channel upper cover 14' and a detection channel lower cover 15'. The detection channel upper cover 14' and the detection channel lower cover 15' are connected through bolts in a fastened mode. The cavity 11' is formed through the cooperation of the detection channel upper cover 14' and the detection channel lower cover 15'. The detection result acquisition device 12' is installed on the side, close to the cavity 11' opening, of the detection channel. The lifting slope 3' is integrally formed at the end, away from the cavity 11' opening, of the detection channel lower cover 15'.

As shown in FIG. 6, FIG. 7 and FIG. 8, the lifting device is an elastic piece 5'. An end of the elastic piece 5' is integrally formed on the side, away from the cavity 11' opening, of the detection channel lower cover 15', an other end of the elastic piece 5' extends towards the side, close to the cavity opening 11', of the detection channel lower cover 15'. The elastic piece 5' tilts from a joint of the elastic piece 5' and the detection channel lower cover 15' to the side close to the detection result acquisition device 12', and the elastic piece 5' has certain elasticity. A gap between the elastic piece 5' and the detection channel upper cover 14' allows the reagent card 2' to enter or exit from the interior of the cavity 11'.

Furthermore, a guiding inclined plane 51' is integrally formed on one side, close to the cavity opening 11', of the elastic piece 5', so that after the reagent card 2' is in contact with the guiding inclined plane 51' at the end part of the elastic piece 5', the elastic piece 5' is compressed under the guide action of the guiding inclined plane 51', and the reagent card 2' can enter the interior of the cavity 11'.

When the reagent card 2' is inserted into the cavity 11', the elastic piece 5' is forced to be pressed downwards to store energy. Force towards the detection channel upper cover 14' is continuously provided for the reagent card 2' until the side wall of the side, close to the detection result acquisition device 12', of the reagent card 2' is tightly attached to the inner wall of the corresponding cavity 11', and the concave detection window 21' and the detection result acquisition device 12' are aligned and mutually inserted to form limitation in the inserted direction. At the moment, the concave detection window 21' and a convex detection result acquisition device 12' play a role of locking structures and are tightly attached to each other, so that data acquisition work can be better completed.

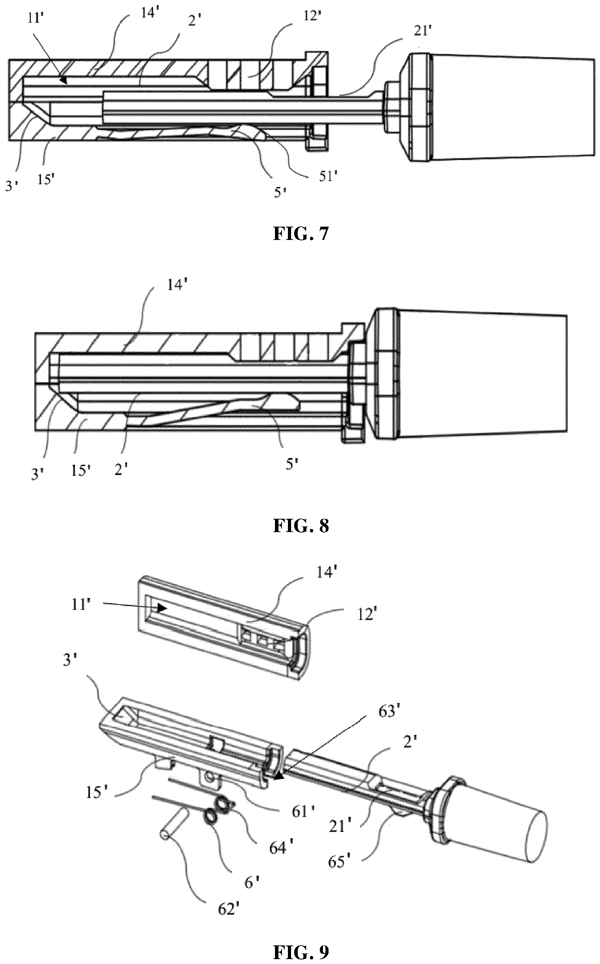

As shown in FIG. 7 and FIG. 8, the process of inserting the reagent card 2' into the cavity 11' includes three states: a horizontally inserted state, a lifting state and an in-place state.

In the horizontally inserted state, a force horizontally towards the interior of the cavity 11' is applied to the reagent card 2', the reagent card 2' is deeply inserted into the cavity 11'. At the moment, the elastic piece 5' is tightly attached to the side wall, deviating from the concave detection window 21', of the reagent card 2' and provides lifting force vertical to the detection channel upper cover 14', so that the reagent card 2' is maintained in a stable state.

In the lifting state, an acting force horizontally towards the interior of the cavity 11' is continuously applied until the end part of the reagent card 2' reaches a position of the lifting slope 3' on the detection channel lower cover 15'. The end part of the reagent card 2' drives the reagent card 2' to be lifted upwards continuously along an inclination angle of the lifting slope 3'. A side, deviating from the concave detection window 21', of the reagent card 2' is continuously subjected to the lifting force provided by the elastic piece 5', so that the reagent card 2' is stably lifted.

In the in-place state, when the end part of the reagent card 2' abuts against a top end of the lifting slope 3', the side wall of the side, close to the detection result acquisition device 12', of the reagent card 2' is tightly attached to the inner wall of the corresponding cavity 11'. The concave detection window 21' and the detection result acquisition device 12' are aligned and are mutually inserted to form limitation in the inserted direction. Under the action of a elastic force of the elastic piece 5', the relative positions of the reagent card 2' and the inner wall of the cavity 11' is constant, so that the operation steps of inserting the reagent card 2' and lifting the reagent card 2' are completed.

### Embodiment III

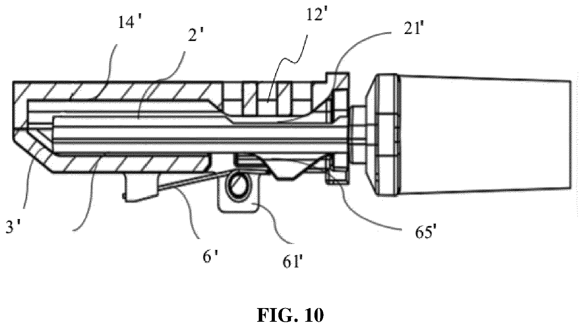

As shown in FIG. 9, FIG. 10 and FIG. 11, a detection result reading device is provided, which includes the reading device body 1' and the reagent card 2'. the cavity 11' at least capable of accommodating a detection part of the reagent card 2' is integrally formed in the interior of the reading device body 1'. The detection result acquisition device 12' is installed on any side wall of the cavity 11'. The detection result acquisition device 12' is in a convex state on the interior of the cavity 11', and a gap between the detection result acquisition device 12' and the side wall of the cavity 11' allows the reagent card 2' to pass through. The detection part of the reagent card 2' is located in the middle of the reagent card 2'. A concave detection window 21' is formed in the detection part of the reagent card 2', and the concave detection window 21' corresponds to the detection result acquisition device 12'.

A lifting device for lifting the detection part of the reagent card 2' to the side close to the detection result acquisition device 12' is installed on the reading device body 1'. A lifting slope 3' is integrally formed at the end, deviating from an cavity opening, of the cavity 11', and the lifting slope 3' is matched with the end, entering the cavity 11', of the reagent card 2' and is configured for guiding the reagent card 2' entering into the cavity 11' to move towards the side close to the detection result acquisition device 12'. When the reagent card 2' is installed in place in the cavity 11', the side wall of the side, close to the detection result acquisition device 12', of the reagent card 2' is tightly attached to the inner wall of the cavity 11', and at the moment, the detection result acquisition device 12' enters the concave area of the concave detection window 21'.

The reading device body 1' includes a detection channel upper cover 14' and a detection channel lower cover 15'. The detection channel upper cover 14' and the detection channel lower cover 15' are connected through bolts in a fastened mode. The cavity 11' is formed through the cooperation of the detection channel upper cover 14' and the detection channel lower cover 15'. The detection result acquisition device 12' is installed on the side, close to the cavity 11' opening, of the detection channel, and the lifting slope 3' is integrally formed at the end, away from the cavity 11' opening, of the detection channel lower cover 15'.

As shown in FIG. 9, FIG. 10 and FIG. 11, the lifting device is a torsion spring 6', a mounting base 61' is integrally formed on the side wall, deviating from the detection channel upper cover 14', of the detection channel lower cover 15'. The torsion spring 6' is installed on the mounting base 61' through bolt 62'. A lifting rod 64' of the torsion spring 6' is located on the side close to the cavity opening 11'. A first dodge opening 63' is formed in the side, close to the cavity opening 11', of the detection channel lower cover 15', and the first dodge opening 63' allows the lifting rod 64' to enter or exit from the interior of the cavity 11'.

A first boss 65' is integrally formed on a side wall, deviating from the detection part, of the reagent card 2'. A side face, making contact with the lifting rod 64', of the first boss 65' is a smooth inclined face, and the first boss 65' is in sliding fit with the lifting rod 64'. After the first boss 65' is in contact with the lifting rod 64', as the reagent card 2' moves into the cavity 11', a contact point of the lifting rod 64' with the first boss 65' gradually moves towards an end part of the first boss 65' until the contact point of the lifting rod 64' with the first boss 65' moves to the end part of the first boss 65'.

In the insertion process, the reagent card 2' enters the interior of the cavity 11' until the first boss 65' makes contact with the lifting rod 64' of the torsion spring 6'. The lifting rod 64' applies a lifting force vertically towards the detection channel upper cover 14' on the first boss 65' at a bottom of the reagent card 2' due to the influence of elastic potential energy of the torsion spring 6'. Meanwhile, the end part, entering the cavity 11', of the reagent card 2' makes contact with the lifting slope 3'.

When the force horizontally towards the interior of the cavity 11' continues to be applied, the end part of the reagent card 2' moves obliquely upwards along a track of the lifting slope 3', and meanwhile the lifting rod 64' continuously gives the reagent card 2' a lifting force vertically towards the detection channel upper cover 14' along the gradient of the first boss 65'.

After the reagent card 2' is completely inserted, the side wall of the side, close to the detection result acquisition device 12', of the reagent card 2' is tightly attached to the inner wall of the corresponding cavity 11'. The concave detection window 21' and the detection result acquisition device 12' are aligned and mutually inserted to form limitation in the inserted direction. The lifting rod 64' is clamped at the end part of the first boss 65', and the lifting force towards the detection channel upper cover 14' is continuously provided for a middle section of the reagent card 2'. The concave detection window 21' of the reagent card 2' is tightly attached to the detection result acquisition device 12' on the detection channel upper cover 14', and meanwhile, the cavity 11' opening is tightly attached to a grab handle of the reagent card 2' to prevent the reagent card 2' from shifting.

At the moment, no effect is achieved when the acting force in the horizontal direction is continuously applied, the reagent card 2' is inserted in place, small-range lifting is completed, and the relative distance between the concave detection window 21' and the detection result acquisition device 12' reaches a tiny distance for high-precision detection.

### Embodiment IV

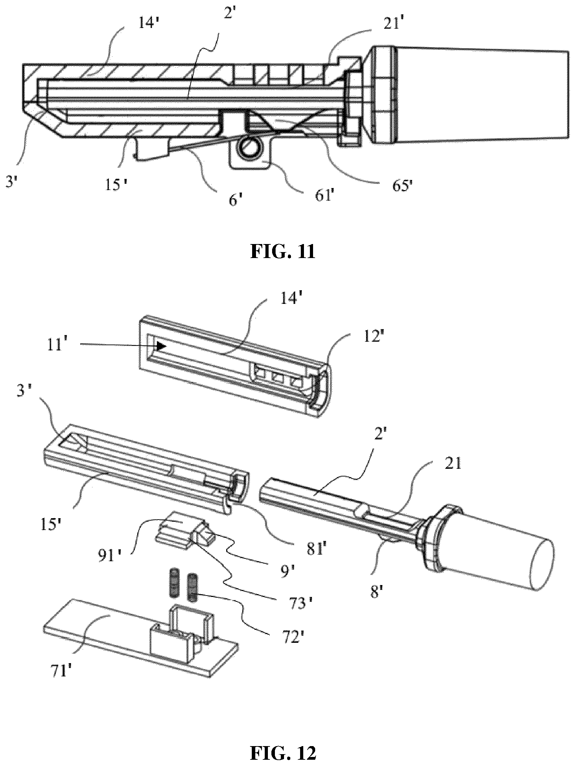

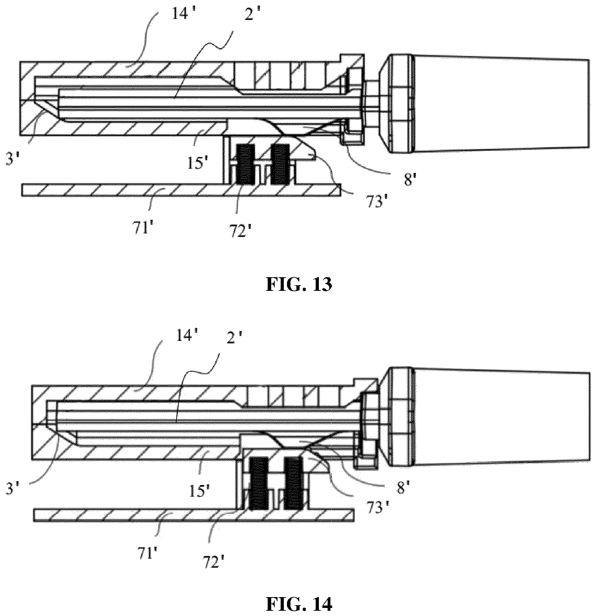

As shown in FIG. 12, FIG. 13 and FIG. 14, a detection result reading device is provided, which includes the reading device body 1' and the reagent card 2'. The cavity 11' at least capable of accommodating a detection part of the reagent card 2' is integrally formed in the interior of the reading device body 1'. The detection result acquisition device 12' is installed on any side wall of the cavity 11'. The detection result acquisition device 12' is in a convex state on the interior of the cavity 11', and a gap between the detection result acquisition device 12' and the side wall of the cavity 11' allows the reagent card 2' to pass through. The detection part of the reagent card 2' is located in the middle of the reagent card 2'. The concave detection window 21' is formed in the detection part of the reagent card 2', and the concave detection window 21' corresponds to the detection result acquisition device 12'.

A lifting device for lifting the detection part of the reagent card 2' to the side close to the detection result acquisition device 12' is installed on the reading device body 1'. A lifting slope 3' is integrally formed at the end, deviating from the cavity opening, of the cavity 11', and the lifting slope 3' is matched with the end, entering the cavity 11', of the reagent card 2' and is configured for guiding the reagent card 2' entering into the cavity 11' to move towards the side close to the detection result acquisition device 12'. When the reagent card 2' is installed in place in the cavity 11', the side wall of the side, close to the detection result acquisition device 12', of the reagent card 2' is tightly attached to the inner wall of the cavity 11', and at the moment, the detection result acquisition device 12' enters the concave area of the concave detection window 21'.

The reading device body 1' includes the detection channel upper cover 14' and the detection channel lower cover 15'. The detection channel upper cover 14' and the detection channel lower cover 15' are connected through bolts in a fastened mode. The cavity 11' is formed through the cooperation of the detection channel upper cover 14' and the detection channel lower cover 15'. The detection result acquisition device 12' is installed on the side, close to the cavity 11' opening, of the detection channel. The lifting slope 3' is integrally formed at the end, away from the cavity 11' opening, of the detection channel lower cover 15'.

As shown in FIG. 12, FIG. 13 and FIG. 14, the lifting device includes an elastic lifting plate 7'. The elastic lifting plate 7' includes a bottom plate 71', springs 72' and a lifting block 73', and each of the springs 72' is connected between the bottom plate 71' and the lifting block 72'. The elastic lifting plate 7' is installed on the side, deviating from the detection channel upper cover 14', of the detection channel lower cover 15'. A second boss 8' is arranged on the side, deviating from the detection part, of the reagent card 2', and the second boss 8' is in sliding fit with the lifting block 73'. A second dodge opening 81' is formed in the side, close to the cavity 11' opening, of the detection channel lower cover 15'. The second dodge opening 81' allows the lifting block 73' to enter or exit from the interior of the cavity 11', and the second dodge opening 81' allows the second boss 8' to enter or exit from the interior of the cavity 11'.

The side, deviating from the bottom plate 71', of the lifting block 73' includes a guide slope 9' and an action plane 91'. The guide slope 9' is located on the side, close to the cavity 11' opening, of the lifting block 73'. When the reagent card 2' moves into the cavity 11', the second boss 8' makes contact with the guide slope 9' and compresses the springs 72', the second boss 8' enters the action plane 91' through the guide slope 9', and the action plane 91' is in abutting fit with the second boss 8'.

As shown in FIG. 12, FIG. 13 and FIG. 14, the insertion process includes three states: a horizontally inserted state, a lifting state of the reagent card 2' and an in-place state.

In the horizontally inserted state, a force horizontally towards the interior of the cavity 11' is applied to the reagent card 2', the reagent card 2' is inserted into the cavity 11'. The second boss 8' is not in contact with the lifting block 73', and the springs 72' are not elastically deformed.

When the reagent card 2' is in the lifting state, after the second boss 8' is in contact with the guide slope 9', the reagent card 2' continuously moves towards the interior of the cavity 11'. The lifting plate moves towards a side close to the bottom plate 71' under the action of the second boss 8'. The springs 72' are compressed, and the second boss 8' is subjected to a force towards the detection channel upper cover 14' under the influence of the elastic potential energy of the spring 72'. As the horizontal force continues to advance, the second boss 8' enters the action plane 91', at the moment, the spring 72' is compressed to a lowest position, a maximum lifting force is provided for the reagent card 2'. The horizontal force continues to be applied, and the end part of the reagent card 2' makes contact with the lifting slope 3', so that the reagent card 2' performs an obliquely upward lifting motion as a whole.

In the in-place state, the end part of the reagent card 2' abuts against the end part of the lifting slope 3'. The side wall of the side, close to the detection result acquisition device 12', of the reagent card 2' is tightly attached to the inner wall of the corresponding cavity 11', and the concave detection window 21' and the detection result acquisition device 12' are aligned and mutually inserted to form limitation in the inserted direction. Because the springs 72' may not return to the relaxed state, the lifting plate always provides a force towards the detection channel upper cover 14' for the reagent card 2', and the reagent card 2' is stably kept in the in-place state in the detection process.

The working principle is as follows:
During work, a worker applies a force horizontally towards the interior of the cavity 11' to the reagent card 2'. The reagent card 2' is inserted into the cavity 11', after the end part, entering into the cavity 11', of the reagent card 2' is in contact with the lifting slope 3', the reagent card 2' continues to move along the track of the lifting slope 3' under the action of the horizontal force and is cooperated with the lifting device to lift the reagent card 2', so that the reagent card 2' is lifted towards the side close to the detection result acquisition device 12'. When the side wall of the side, close to the detection result acquisition device 12', of the reagent card 2' is tightly attached to the inner wall of the corresponding cavity 11', the concave detection window 21' and the detection result acquisition device 12' are aligned and mutually inserted to form limitation in the inserted direction, and at the moment, the reagent card 2' is in the in-place state. It is guaranteed that the reagent card 2' is stably kept in the in-place state in the detection process by virtue of an acting force applied to the reagent card 2' by the lifting device towards the detection channel upper cover 14'.

It should be noted that
Firstly, the height of the cavity herein refers to a vertical distance between the upper wall of the cavity and the lower wall of the cavity, and the height of the reagent card refers to a vertical distance between the upper surface of the reagent card and the lower surface of the reagent card;
Secondly, a side of the detection part of the reagent card is set as the upper surface of the reagent card, and an other side, opposite to the detection part, of the reagent card is set as the lower surface of the reagent card; and
Thirdly, a side, corresponding to the detection part, of the cavity is set as the upper wall, and an other side, opposite to the detection part, in the cavity is set as the lower wall.

### Embodiment V

The detection result reading device, in an exploded view as shown in FIG. 15, includes the detection channel upper cover 1, a detection window of a detection channel upper cover 2, an end part slope of a detection channel base 3, an end part of the reagent card 4, an upper surface of the reagent card 5, a lower surface of the reagent card 6, a detection channel base 7, a torsion spring mounting base of a detection channel base 8, a torsion spring lifting rod 9, a torsion spring 10, a torsion spring bolt 11, the concave detection window 12 and the boss 13.

The detection channel upper cover 1 and the detection channel base 7 are mutually buckled and fixed. The torsion spring 10 is installed in a clamping groove of the detection channel base 7, the torsion spring bolt 11 penetrates through the torsion spring mounting base of a detection channel base 8, the torsion spring 10 is fixed onto the detection channel base 7, and installation of the detection channel is completed.

FIG. 20 is a top view of the reagent card in an uninserted state. The boss 13 is arranged outside the detection channel. The torsion spring lifting rod 9 is in a normal state, no upward lifting force is applied to an external object. And at the moment, force in the horizontal direction continues to be applied to the reagent card so that the reagent card continues to go deep into the detection channel.

FIG. 18 is a side cross-sectional view of the reagent card in the state after being inserted. The insertion state of the reagent card is changed from FIG. 22 to the state of FIG. 18 due to continued application of the horizontal force.

In the insertion process, when the reagent card passes through the detection channel until the boss 13 is in contact with the torsion spring lifting rod 9 of the torsion spring 10. The torsion spring lifting rod 9 exerts vertical upward lifting force on the boss 13 due to the influence of the elastic potential energy of the torsion spring 10, and meanwhile the end part of the reagent card 4 is in contact with the end part slope of a detection channel base 3.

And when a horizontal leftward force is continuously applied, the end part of the reagent card 4 obliquely moves upwards along the track of the end part slope of a detection channel base 3. Meanwhile, the torsion spring lifting rod 9 continuously applies vertical upward lifting force to the upper surface of the reagent card 5 and the lower surface of the reagent card 6 along the gradient of the boss 13.

After the reagent card is completely inserted, the end part of the reagent card 4 is clamped at an included angle between the end part slope of a detection channel base 3 and the detection channel upper cover 1. Meanwhile, the concave detection window 12 is completely matched with the detection window of a detection channel upper cover 2. The torsion spring lifting rod 9 is clamped on a plane of the boss 13 of the lower surface of the reagent card 6, and an upward lifting force is continuously provided for the middle section of the reagent card, so that the concave detection window 12 is tightly attached to the detection window of a detection channel upper cover 2. Meanwhile, a socket of the detection channel is tightly attached to the grab handle of the reagent card, so that the reagent card is prevented from shifting.

At the moment, no effect is achieved when the horizontal force is continuously applied, the reagent card is inserted in place, small-range lifting is completed, and a small distance for high-precision detection is achieved between a detected object and a detection sensor.

### Embodiment VI

According to the detection result reading device, the detection result reading device is provided with the cavity at least capable of accommodating the detection part of the reagent card. The upper wall of the cavity is provided with the detection window of a detection channel upper cover 2 matched with the reagent card. The height of the cavity is larger than that of the reagent card, and the height between the detection result acquisition device and the lower wall of the cavity is at least equal to that of the reagent card.

The detection channel upper cover 1 and the detection channel base 7 are integrally formed or assembled in a split mode.

According to the design, a molded disposable plastic elastic piece 14 is adopted to act on the lower surface of the reagent card 6 to generate an upward force. When the reagent card is inserted into the cavity of detection channel, the elastic piece 14 is forced to be pressed downwards to store energy. An upward force is continuously provided for the reagent card until the recessed concave detection window 12 and the convex detection window of a detection channel upper cover 2 are aligned and mutually inserted to form limitation in the inserted direction. At the moment, the concave detection window 12 and the convex detection window of a detection channel upper cover 2 play a role of locking structures and are tightly attached to each other, so that data acquisition work can be better completed.

The process of inserting the reagent card into the detection channel includes three states, namely a horizontally inserted state, a lifting state and an in-place state.

In the horizontally inserted state, as shown in FIG. 24, a horizontal leftward force is applied to the reagent card, the reagent card is deeply inserted into the detection channel. At the moment, the elastic piece 14 integrated at the bottom of the detection channel is tightly attached to the lower surface of the reagent card 6 to provide vertical upward lifting force. Meanwhile, the concave detection window 12 is tightly attached to the detection window of a detection channel upper cover 2, so that the reagent card is kept in a stable state.

In the lifting state, the horizontal acting force is continuously applied until the end part of reagent card 4 reaches a position of the end part slope of a detection channel base 3. The end part of reagent card 4 drives the reagent card to be continuously lifted upwards along with the angle of the end part slope of a detection channel base 3. The middle part of the reagent card is continuously subjected to lifting force provided by the elastic sheet 14 integrated at the bottom of the detection channel, so that the reagent card is stably lifted.

In the in-place state, when the end part of reagent card 4 abuts against the top end of the end part slope of a detection channel base 3, the concave detection window 12 completely coincides with the detection window of a detection channel upper cover 2. The reagent card is fixed at the detection part under the elastic action of the elastic piece 14 integrated at the bottom of the detection channel, and the operation steps of inserting the reagent card and lifting the reagent card are completed.

### Embodiment VII

According to the detection result reading device, the detection result reading device is provided with the cavity at least capable of accommodating the detection part of the reagent card. The upper wall of the cavity is provided with detection window of the detection channel upper cover 2 matched with the reagent card. The height of the cavity is larger than that of the reagent card, and the height between the detection window of the detection channel upper cover 2 and the lower wall of the cavity is at least equal to that of the reagent card. As shown in FIG. 33, the lever 16 capable of rotating is an asymmetric lever, a left side of the lever 16 is slightly higher than a right side. The design is that the lever 16 capable of rotating acts on the bottom the cavity to generate an upward force, so that when the reagent card just enters the cavity, an outer side of the lever 16 capable of rotating is forced to rotate downwards, and an inner side of the lever capable of rotating 16 apparently rotates upwards. When the reagent card abuts against the inner side of the lever 16, the outer side and the inner side of the lever 16 are stressed at the same time. An upward force is continuously provided for the reagent card until the concave detection window 12 and the convex detection window of a detection channel upper cover 2 are aligned and mutually inserted to form limitation in the inserted direction. At the moment, the concave detection window 12 and the convex detection window of a detection channel upper cover 2 play a role of locking structures and are tightly attached to each other, so that data acquisition work can be better completed.

The process of inserting the reagent card into the detection channel includes three states, namely a horizontally inserted state, a lifting state and an in-place state.

In the horizontally inserted state, as in the state of FIG. 34, the horizontal leftward force is applied to the reagent card to deeply insert the reagent card into the detection channel. At the moment, a bottom lifting block of the lever 18 is forced to rotate downwards and a lever end part slope 25 on the right of the lever is lifted upwards so that the reagent card is maintained in a stable state.

In the lifting state, the horizontal acting force is continuously applied until the end part of reagent card 4 reaches a position of the lever end part slope 25. The reagent card is continuously lifted obliquely upwards along with the angle of the lever end part slope 25. The middle of the reagent card is continuously subjected to lifting force provided by the bottom lifting block of the lever 18 at the bottom, so that the reagent card is stably lifted.

In the in-place state, when the end part of reagent card 4 abuts against an end of the lever end part slope 25, the concave detection window 12 completely coincides with the detection window of a detection channel upper cover 2. The reagent card is fixed at the detection part under the elastic action of the bottom lifting block of the lever 18 at the bottom, and the operation steps of inserting the reagent card and lifting the reagent card are completed.

In order to take out the reagent card, the user applies a pulling force,which will cause the lever 16 to be slightly deformed until the reagent card is separated from the lever end part slope 25. The lever end part slope 25 now can lift freely (the lever rotates around a fixed shaft of a lever 17), so that the bottom lifting block of the lever 18 can fall off and release the reagent card.

When the reagent card is inserted into the detection channel, the bottom lifting block of the lever 18 abuts against the lower surface of a reagent card 6, at the moment, the end part of reagent card 4 does not make contact with the lever end part slope 25. As the continuous insertion of the reagent card, due to the fact that a gradual lifting process is conducted from the middle shaft of the lever to the lever end part slope 25, according to the lever principle, the top of the lever is subjected to vertically downward pressure, the bottom lifting block of the lever 18 feeds back a vertical upward lifting force to the lower surface of a reagent card 6.

When the reagent card is completely inserted into the detection channel, the end part of reagent card 4 passes through the lever end part slope 25 to a lever top platform. The lower surface of a reagent card 6 is supported by the lever top platform, and the lever top platform is subjected to vertical downward pressure transmitted by the reagent card due to internal extrusion of the detection channel. According to the lever principle, the supporting point is the fixed shaft of a lever 17. The tail of the lever is lifted, a vertically upward acting force is applied to the middle of the reagent card lower cover. The concave detection window 12 is tightly attached to the detection window of a detection channel upper cover 2, and the action of lifting the inserted reagent card is completed.

### Embodiment VIII

The detection result reading device, in an exploded view as shown in FIG. 42, includes the detection channel upper cover 1, the detection window of a detection channel upper cover 2, the end part slope of a detection channel base 3, the end part of reagent card 4, the upper surface of a reagent card 5, the detection channel base 7, the concave detection window 12, the boss 13, a lower notch of a detection channel inlet 20, a lifting plate 21, lifting plate springs 22, lifting plate spring bases 23 and a lifting plate elastic device bottom plate 24.

The insertion process includes three states, namely a horizontally inserted state, a lifting state of the reagent card and an in-place state.

The horizontally inserted state is as shown in FIG. 43, when the horizontal force is applied to the reagent card, the reagent card is inserted into the detection channel. The boss 13 is not in contact with the lower notch of the detection channel inlet 20, at the moment, the lifting plate springs 22 do not elastically deform, and no elastic force is applied to the lifting plate 21 in the detection channel.

The lifting state of the reagent card is as shown in FIG. 44. After the boss 13 is in contact with the slope of the lifting plate 21 of the detection channel lower cover, the upper cover of the reagent card is in contact with the detection channel upper cover 1, so that the lifting plate 21 is pressed downwards by the boss 13. The boss 13 is subjected to a vertically upward force under the influence of the elastic potential energy of the lifting plate springs 22. A front section slope of the boss 13 is in contact with a lifting plate slope, a bottom platform of the boss 13 is in contact with a top platform of the lifting plate 21 along with continuous pushing of the horizontal force. The lifting plate springs 22 are compressed to the lowest position at the moment to provide the maximum lifting force for the reagent card. Then horizontal force is continuously applied, the end part of reagent card 4 is in contact with the end part slope of a detection channel base 3, and the front section slope of the concave detection window 12 is in contact with the front section slope of the detection window of a detection channel upper cover 2, so that the reagent card is lifted obliquely upwards as a whole.

The in-place state is as shown in FIG. 45, the end part of reagent card 4 abuts against the end of the detection channel. The concave detection window 12 is closely attached to the detection window of a detection channel upper cover 2. Because the lifting plate springs 22 at the bottom of the lifting plate 21 does not return to a loose state, the lifting plate 21 always provides a vertically upward force to the boss 13, and the reagent card is stably kept in a proper state in the detection process.

### Embodiment IX

According to the detection result reading device, the detection result reading device is provided with the cavity at least capable of accommodating the detection part of the reagent card. The upper wall of the cavity is provided with the detection result acquisition device matched with the reagent card. The boss is arranged below the reagent card, and when the boss of the reagent card slides into the cavity, the detection part of the reagent card is driven by the boss to be lifted by a preset height towards the detection result acquisition device.

### Embodiment X

According to the detection result reading device, the detection result reading device is provided with the cavity at least capable of accommodating the detection part of the reagent card. The upper wall of the cavity is provided with a detection result acquisition device matched with the reagent card. The lower wall of the cavity is internally provided with an elastic component, the end part of the elastic component protrudes out of the surface of the cavity by a certain height. And when the reagent card slides into the cavity, the end part of the elastic component abuts against the lower part of the reagent card, and the detection part of the reagent card is driven by the elastic component to be lifted by a preset height towards the detection result acquisition device.

The foregoing description of specific exemplary embodiments of the present disclosure is for the purposes of explanation and illustration. These descriptions are not intended to limit the present disclosure to the precise forms disclosed, and it will be apparent that many changes and modifications are possible according to the above teachings. The exemplary embodiments are chosen and described in order to explain the specific principles of the present disclosure and practical application of the specific principles, so that those skilled in the art make and utilize various different exemplary embodiments of the present disclosure as well as various different choices and changes. The scope of protection of the present disclosure is defined by the claims and equivalents thereof.

In the description of the present disclosure, it needs to be understood that the indicative direction or position relations of the terms such as "upper", "lower", "front", "rear", "left", "right", "vertical", "horizontal", "top", "bottom", "inside" and "outside" are direction or position relations illustrated based on the attached figures, just for facilitating the description of the present disclosure and simplifying the description, but not for indicating or hinting that the indicated device or element must be in a specific direction and is constructed and operated in the specific direction. So the terms cannot be understood as the restriction of the present disclosure. Specific embodiments of the present disclosure have been described above. It should be understood that the present disclosure is not limited to the particular implementation described above, and those skilled in the art may make various changes or modifications within the scope of the claims which do not affect the substance of the present disclosure. In absence of conflicts, the embodiments of the disclosure and features in the embodiments may be combined with one another.

## Claims

1. A detection result reading device, the device comprising a reading device body, wherein the reading device body is provided with a cavity at least capable of accommodating a detection part of a reagent card, a side wall of the cavity is provided with a detection result acquisition device, and the detection result acquisition device is arranged opposite to the detection part of the reagent card; and
the reading device body is further provided with a lifting device for lifting the detection part of the reagent card towards a side of the cavity close to the detection result acquisition device.

2. The detection result reading device according to claim 1, wherein the detection part of the reagent card is provided with a concave detection window, the detection result acquisition device is provided with a convex structure, the convex structure of the detection result acquisition device is matched with the concave detection window, and a first gap between the detection result acquisition device and the side wall of the cavity enables the reagent card to pass through.

3. The detection result reading device according to claim 2, wherein a lifting slope is arranged at an end of the cavity which is away from a cavity opening of the cavity, and is configured for guiding the reagent card within the cavity to move towards the side of the cavity close to the detection result acquisition device; and
the reagent card moves in a direction close to the detection result acquisition device under a cooperative action of the lifting device and the lifting slope; and when the reagent card is close to the side wall where the detection result acquisition device is located, and the reagent card is tightly attached to the side wall of the cavity, the convex structure of the detection result acquisition device is embedded in the concave detection window.

4. The detection result reading device according to claim 1, wherein the lifting device comprises a lever, the lever is pivoted in another side wall of the cavity which is opposite to the detection result acquisition device, and a rotating shaft of the lever is not higher than a lower wall of the cavity;
in a first state, the reagent card is not inserted into the cavity; an end, which is away from the cavity opening, of the lever tilts towards the side wall of the cavity where the detection result acquisition device is located; and a second gap between an other end, which is close to the cavity opening, of the lever and the side wall of the cavity where the detection result acquisition device is located enables the reagent card to pass through; and
in a second state, the reagent card is tightly attached to the side wall of the cavity where the detection result acquisition device is located, two rotating arms of the lever are both located in the cavity, a relative height between an end part of each of the two rotating arms of the lever and the rotating shaft of the lever is equal, and the end part of each of the two rotating arms of the lever is in contact fit with the reagent card.

5. The detection result reading device according to claim 4, wherein an end, which is close to the cavity opening, of one of the two rotating arms of the lever is provided with a convex part, and an other end, which is away from the cavity opening, of another one of the two rotating arms of the lever is provided with a lifting inclined plane;
a first opening is formed in the another side wall, which is provided with the lever having the two rotating arms, of the cavity, and the first opening enables one of the two rotating arms of the lever which is close to the cavity opening to enter or exit from an interior of the cavity.

6. The detection result reading device according to claim 1, wherein the lifting device comprises an elastic piece, an end of the elastic piece is fixedly connected with the another side wall, which is opposite to the detection result acquisition device, of the cavity, an other end of the elastic piece extends towards the cavity opening, the elastic piece tilts towards the detection result opening device from a joint of the elastic piece and the cavity, and the elastic piece enables the reagent card to enter or exit from the interior of the cavity.

7. The detection result reading device according to claim 6, wherein a side, which is close to the cavity opening, of the elastic piece is provided with a guiding inclined plane, and in the second state, the reagent card is tightly attached to the side wall of the cavity where the detection result acquisition device is located, and an end, which is close to the cavity opening, of the elastic piece abuts against the reagent card.

8. The detection result reading device according to claim 1, wherein the lifting device comprises a torsion spring installed on an outer wall, which is opposite to the detection result acquisition device, of the cavity, a lifting rod of the torsion spring is close to the cavity opening, a first dodge opening is formed in the side wall, which is deviating from the detection result acquisition device, of the cavity, and the first dodge opening enables the lifting rod of the torsion spring to enter or exit from the interior of the cavity;
a side, which is away from the detection part, of the reagent card is provided with a first boss; a side face, which is in contact with the lifting rod of the torsion spring, of the first boss is a smooth inclined face; and the first boss is in sliding fit with the lifting rod of the torsion spring;
after the first boss is in contact with the lifting rod of the torsion spring, a contact point of the lifting rod of the torsion spring and the first boss moves towards an end part of the first boss along with a movement of the reagent card into the cavity, until the contact point of the lifting rod of the torsion spring and the first boss moves to the end part of the first boss.

9. The detection result reading device according to claim 1, wherein the lifting device comprises an elastic lifting plate, the elastic lifting plate comprises a bottom plate, springs and a lifting block, and each of the springs is connected between the bottom plate and the lifting block; a second dodge opening is formed in the side wall, which is opposite to the detection result acquisition device, of the cavity, and the second dodge opening enables the lifting block to enter or exit from the interior of the cavity; and
a second boss is arranged on the side, which is away from the detection part, of the reagent card, and the second boss is in sliding fit with the lifting block.

10. The detection result reading device according to claim 9, wherein a side, which is away from the bottom plate, of the lifting block comprises a guide slope and an action plane, when the reagent card moves into the cavity, the second boss is in contact with the guide slope and compresses the springs, the second boss enters the action plane through the guide slope, and the action plane is abutted against the second boss.

11. A detection result reading device, the detection result reading device being provided with a cavity at least capable of accommodating a detection part of a reagent card, and an upper wall of the cavity being provided with a detection result acquisition device matched with the reagent card, wherein a boss is arranged a lower part of the reagent card, and when the boss of the reagent card slides into the cavity, the detection part of the reagent card is driven by the boss to be lifted up by a preset height towards the detection result acquisition device.

12. A detection result reading device, the detection result reading device being provided with a cavity at least capable of accommodating a detection part of a reagent card, and an upper wall of the cavity being provided with a detection result acquisition device matched with the reagent card, wherein a lower wall of the cavity is internally provided with an elastic component, an end part of the elastic component protrudes out of a surface of the cavity by a predetermined height, and when the reagent card slides into the cavity, the end part of the elastic component abuts against a lower part of the reagent card, and the detection part of the reagent card is driven by the elastic component to be lifted up by a preset height towards the detection result acquisition device.

13. A detection result reading device, the detection result reading device being provided with a cavity at least capable of accommodating a detection part of a reagent card, and an upper wall of the cavity being provided with a detection result acquisition device matched with the reagent card, wherein a boss is arranged a lower part of the reagent card, a lower wall of the cavity is internally provided with an elastic component, an end part of the elastic component protrudes out of a surface of the cavity by a predetermined height, and when the boss of the reagent card slides into the cavity, the end part of the elastic component abuts against the lower part of the reagent card, and the detection part of the reagent card is driven by the boss and the elastic component to be lifted up by a preset height towards the detection result acquisition device.

14. The detection result reading device according to any one of claims 11 to 13, wherein the detection part of the reagent card is lower than other parts of the reagent card in height, the detection result acquisition device at least partially protrudes out of the upper wall of the cavity, and an outer contour, which is higher than the upper wall of the cavity, of the detection result acquisition device is less than an inner contour of a concave part of the detection part of the reagent card.

15. The detection result reading device according to any one of claims 11 to 13, wherein the detection part of the reagent card is provided with a concave detection window, a convex structure of the detection result acquisition device is matched with the concave detection window of the detection card in shape, the detection result acquisition device corresponding to an inner wall of the cavity is designed to sink, and when the reagent card is inserted to reach a detection position, the reagent card is attached closely to the detection part after the detection part is sunk, under an action of at least one of the elastic component or the boss of the reagent card.

16. The detection result reading device according to any one of claims 11 to 13, wherein a height of the cavity is greater than a height of the reagent card, and a height between the detection result acquisition device and the lower wall of the cavity is at least equal to the height of the reagent card.

17. The detection result reading device according to any one of claims 11 to 13, wherein the lower wall of the cavity comprises a flat-bottom slideway and a lifting slope arranged at a tail end of the flat-bottom slideway, and the lifting slope corresponds to an end part of the reagent card and is used for assisting in lifting the end part of the reagent card and limiting the end part of the reagent card.

18. The detection result reading device according to any one of claims 11 to 13, wherein the detection result acquisition device is one of a fluorescence system, a visual camera system and a reflection system.

19. The detection result reading device according to any one of claims 11 to 13, wherein the cavity of the detection result reading device is formed by combing a detection channel upper cover and a detection channel base together.

20. The detection result reading device according to claim 17, wherein the detection channel upper cover and the detection channel base are integrally formed or assembled in a split mode.

21. The detection result reading device according to any one of claims 11 to 13, wherein the elastic component is a torsion spring, and the torsion spring is installed in a clamping groove preset in the lower wall of the cavity through a torsion spring bolt.

22. The detection result reading device according to any one of claims 11 to 13, wherein the elastic component is further an elastic piece, a cam, a cantilever or other physical structures with a lifting function.

23. The detection result reading device according to claim 22, wherein the elastic component is the elastic piece, an end of the elastic piece is fixedly connected with the lower wall of the cavity, and an other end, corresponding to a cavity opening of the cavity, of the elastic piece tilts towards the upper wall of the cavity.

24. The detection result reading device according to claim 22, wherein the elastic component is a lever, the lever is pivoted in the lower wall of the cavity, a rotating shaft of the lever is not higher than the lower wall of the cavity, an end part of each of two rotating arms of the lever upwards protrudes by a predetermined height by taking the rotating shaft as a reference, and a protrusion height of an inner end part of the lever is greater than a protrusion height of an outer end part of the lever; and when the reagent card slides into and abuts against the inner end part of the lever, the inner end part of the lever and the end part of the reagent card, and the outer end part of the lever and the lower part of the reagent card form upper and lower position-limiting respectively; and the detection result acquisition device and the detection part of the reagent card, and the inner end part of the lever and the end part of the reagent card form in-out movement position-limiting respectively.

25. The detection result reading device according to claim 24, wherein a boss is arranged at the outer end part of the lever, a lifting slope is arranged at the inner end part of the lever, a groove is formed in a portion, corresponding to the lever, of the lower wall of the cavity, the rotating shaft of the lever is arranged in the groove, and one of the two rotating arms of the lever enters the groove when the one of the rotating arms selectively rotates to an extreme position; and when the reagent card slides into the cavity and reaches the outer end part of the lever, the boss of the lever is arranged in the groove and is not higher than the lower wall of the cavity, and when the reagent card continues to slide into and abut against the lifting slope of the lever, the boss of the reagent card is capable of bearing a force to be lifted up and abut against the lower part of the reagent card.

26. The detection result reading device according to claim 25, wherein when the reagent card slides into and abuts against the inner end part of the lever, the lifting slope of the lever and the end part of the reagent card, and the boss of the lever and the lower part of the reagent card form upper and lower position-limiting respectively; and the detection result acquisition device and the detection part of the reagent card, and the lifting slope of the lever and the end part of the reagent card form in-out movement position-limiting respectively.

27. The detection result reading device according to claim 24, wherein when an outer one of the two rotating arms and an inner one of the two rotating arms of the lever are both in a horizontal state, a height of the lifting slope is larger than a height of the boss.

28. The detection result reading device according to claim 22, wherein the elastic component is an elastic lifting plate, a boss is arranged the lower part of the reagent card which is corresponding to the detection part, a notch that is configured for enabling the elastic lifting plate to axially slide is formed in a lower wall of the cavity opening; when a top of the elastic lifting plate does not bear a force, a height between an end part of the elastic lifting plate and the detection result acquisition device is equal to a height of the reagent card; when the boss of the reagent card slides into the cavity opening, the end part of the elastic lifting plate abuts against the boss of the reagent card and is pressed to sink, and the detection part of the reagent card is driven by the boss and the elastic component to be lifted up to a preset height towards the detection result acquisition device.

29. The detection result reading device according to claim 28, wherein the elastic lifting plate comprises a detection channel bottom plate, springs and a lifting plate, the detection channel bottom plate is assembled at a bottom of the detection result reading device, and each of the springs is supported between the detection channel bottom plate and the lifting plate; and a surface of the lifting plate comprises a lifting slope and a plane.

30. The detection result reading device according to claim 29, wherein the detection channel bottom plate is provided with a spring mounting base of the detection channel bottom plate, an end of each of the springs is sleeved on the spring mounting base of the detection channel bottom plate, and an other end of the spring abuts against an interior of the lifting plate.

31. A detection result reading device, the detection result reading device being provided with a cavity at least capable of accommodating a detection part of a reagent card, and an upper wall of the cavity being provided with a detection result acquisition device matched with the reagent card, wherein a boss is arranged a lower part of the reagent card, and when the boss of the reagent card slides into the cavity, the detection part of the reagent card is driven by the boss to be lifted up by a preset height towards the detection result acquisition device.

32. A detection result reading device, the detection result reading device being provided with a cavity at least capable of accommodating a detection part of a reagent card, and an upper wall of the cavity being provided with a detection result acquisition device matched with the reagent card, wherein a lower wall of the cavity is internally provided with an elastic component, an end part of the elastic component protrudes out of a surface of the cavity by a predetermined height, and when the reagent card slides into the cavity, the end part of the elastic component abuts against a lower part of the reagent card, and the detection part of the reagent card is driven by the elastic component to be lifted up by a preset height towards the detection result acquisition device.

33. A detection result reading device, the detection result reading device being provided with a cavity at least capable of accommodating a detection part of a reagent card, and an upper wall of the cavity being provided with a detection result acquisition device matched with the reagent card, wherein a boss is arranged a lower part of the reagent card, a lower wall of the cavity is internally provided with an elastic component, an end part of the elastic component protrudes out of a surface of the cavity by a predetermined height, and when the boss of the reagent card slides into the cavity, the end part of the elastic component abuts against a lower part of the reagent card, and the detection part of the reagent card is driven by the boss and the elastic component to be lifted up by a preset height towards the detection result acquisition device.

34. The detection result reading device according to any one of claims 31 to 33, wherein the detection part of the reagent card is lower than other parts of the reagent card in height, the detection result acquisition device at least partially protrudes out of the upper wall of the cavity, and an outer contour, which is higher than the upper wall of the cavity, of the detection result acquisition device is not larger than an inner contour of a concave part of the detection part of the reagent card.

35. The detection result reading device according to any one of claims 31 to 33, wherein the detection part of the reagent card is provided with a concave detection window, a convex structure of the detection result acquisition device is matched with the concave detection window of the detection card in shape, the detection result acquisition device corresponding to an inner wall of the cavity is designed to sink, and when the reagent card is inserted to reach a detection position, the reagent card is attached closely to the detection part after being sunk, under an action of at least one of the elastic component or the boss of the reagent card.

36. The detection result reading device according to any one of claims 31 to 33, wherein a height of the cavity is greater than a height of the reagent card, and a height between the detection result acquisition device and the lower wall of the cavity is at least equal to the height of the reagent card.

37. The detection result reading device according to any one of claims 31 to 33, wherein the lower wall of the cavity comprises a flat-bottom slideway and an end part slope of the detection channel base arranged at a tail end of the flat-bottom slideway, and the detection channel base end part slope corresponds to an end part of the reagent card and is used for assisting in lifting the end part of the reagent card and limiting the end part of the reagent card.

38. The detection result reading device according to any one of claims 31 to 33, wherein the detection result acquisition device is one of a fluorescence system, a visual camera system and a reflection system.

39. The detection result reading device according to any one of claims 31 to 33, wherein the cavity of the detection result reading device is formed by combing a detection channel upper cover and a detection channel base together.

40. The detection result reading device according to claim 39, wherein the detection channel upper cover and the detection channel base are integrally formed or assembled in a split mode.

41. The detection result reading device according to any one of claims 31 to 33, wherein the elastic component is a torsion spring, and the torsion spring is installed in a clamping groove preset in the lower wall of the cavity through a torsion spring bolt.

42. The detection result reading device according to any one of claims 31 to 33, wherein the elastic component is further an elastic piece, a cam, a cantilever or other physical structures with a lifting function.

43. The detection result reading device according to claim 42, wherein the elastic component is the elastic piece, an end of the elastic piece is fixedly connected with the lower wall of the cavity, and an other end, corresponding to a cavity opening of the cavity, of the elastic piece tilts towards the upper wall of the cavity.

44. The detection result reading device according to claim 42, wherein the elastic component is a lever, the lever is pivoted in the lower wall of the cavity, a fixed shaft of a lever of the lever is not higher than the lower wall of the cavity, an end part of each of two rotating arms of the lever upwards protrudes by a predetermined height by taking the fixed shaft of a lever as a reference, and a protrusion height of an inner end part of the lever is greater than a protrusion height of an outer end part of the lever; and when the reagent card slides into and abuts against the inner end part of the lever, the inner end part of the lever and the end part of the reagent card, and the outer end part of the lever and the lower part of the reagent card form upper and lower position-limiting respectively, and the detection result acquisition device and the detection part of the reagent card, and the inner end part of the lever and the end part of the reagent card form in-out movement position-limiting respectively.

45. The detection result reading device according to claim 44, wherein a lever bottom lifting block is arranged at the outer end part of the lever, a lever end part slope is arranged at the inner end part of the lever, a groove is formed in a portion, corresponding to the lever, of the lower wall of the cavity, the fixed shaft of the lever of the lever is arranged in the groove, and one of the two rotating arms of the lever enter the groove when the one of the two rotating arms selectively rotates to an extreme position; and when the reagent card slides into the cavity and reaches the outer end part of the lever, the bottom lifting block of the lever is arranged in the groove and is not higher than the lower wall of the cavity, and when the reagent card continues to slide into and abut against the lever end part slope of the lever, the boss of the reagent card is capable of bearing a force to be lifted up and abut against the lower part of the reagent card.

46. The detection result reading device according to claim 45, wherein when the reagent card slides into and abuts against the inner end part of the lever, the lever end part slope of the lever and the end part of the reagent card, and the lever bottom lifting block of the lever and the lower part of the reagent card form upper and lower position-limiting respectively, and the detection result acquisition device and the detection part of the reagent card, and the lever end part slope of the lever and the end part of the reagent card form in-out movement position-limiting respectively.

47. The detection result reading device according to claim 45, wherein when an outer one of the two rotating arms and an inner one of the two rotating arms of the lever are both in a horizontal state, a height of the lever end part slope is larger than a height of the lever bottom lifting block.

48. The detection result reading device according to claim 42, wherein the elastic component is an elastic lifting plate, a boss is arranged the lower part of the reagent card which is corresponding to the detection part, a notch that is configured for enabling the elastic lifting plate to axially slide is formed in a lower wall of the cavity opening, and when a top of the elastic lifting plate does not bear a force, a height between an end part of the elastic lifting plate and the detection result acquisition device is equal to a height of the reagent card; when the boss of the reagent card slides into the cavity opening, the end part of the elastic lifting plate abuts against the boss of the reagent card and is pressed to sink, and the detection part of the reagent card is driven by the boss and the elastic component to be lifted up to a preset height towards the detection result acquisition device.

49. The detection result reading device according to claim 48, wherein the elastic lifting plate comprises a bottom plate of the lifting plate elastic device, lifting plate springs and a lifting plate, the bottom plate of the lifting plate elastic device is assembled at a bottom of the detection result reading device, and each of the lifting plate springs is supported between the bottom plate of the lifting plate elastic device and the lifting plate; and a surface of the lifting plate comprises a lifting slope and a plane.

50. The detection result reading device according to claim 49, wherein the lifting plate elastic device bottom plate is provided with a lifting plate spring base, an end of each of the lifting plate springs is sleeved on the lifting plate spring base, and an other end of the lifting plate spring abuts against an interior of the lifting plate.
